(19) Europäisches Patentamt
European Patent Office
Office européen des brevets

(11) EP 4 582 487 A1

(12) **EUROPEAN PATENT APPLICATION**
published in accordance with Art. 153(4) EPC

(43) Date of publication:
**09.07.2025 Bulletin 2025/28**

(21) Application number: **23872372.0**

(22) Date of filing: **26.09.2023**

(51) International Patent Classification (IPC):
***C08L 83/07*** (2006.01) ***B32B 27/00*** (2006.01)
***B32B 27/18*** (2006.01) ***C08K 3/04*** (2006.01)
***C08L 83/05*** (2006.01)

(52) Cooperative Patent Classification (CPC):
**B32B 27/00; B32B 27/18; C08K 3/04; C08L 83/04**

(86) International application number:
**PCT/JP2023/035043**

(87) International publication number:
**WO 2024/071150 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156902**

(71) Applicant: **Dow Toray Co., Ltd.**
**Tokyo 140-8617 (JP)**

(72) Inventor: **FUKUI, Hiroshi**
**Ichihara-shi Chiba 299-0108 (JP)**

(74) Representative: **Murgitroyd & Company**
**165-169 Scotland Street**
**Glasgow G5 8PL (GB)**

# (54) CURABLE ORGANOPOLYSILOXANE COMPOSITION FOR FORMING ELECTRODE LAYER, MULTILAYER BODY COMPRISING ELECTRODE LAYER, USE OF SAME AND METHOD FOR PRODUCING SAME

(57) PROBLEM

To provide an electrode layer-forming composition wherein the electrode layer formed by a curing reaction has minimal temperature dependency, adhesion to a dielectric layer, conformability, and shape retention properties to the resulting electrode layer are excellent, and an electrode layer having viscoelastic properties sufficient for practical use can be formed, and which is unlikely to cause problems such as peeling or defects in the electrode layer even when used in a transducer; as well as to provide a laminate body, uses thereof, and a production method thereof.

SOLUTION

An electrode layer-forming curable organopolysiloxane composition containing:
(A) a linear organopolysiloxane having a curing reactive functional group containing a carbon-carbon double bond at least at both ends of the molecular chain;
(B) MQ type organopolysiloxane resin having a weight average molecular weight calculated based on standard polystyrene of 5000 or more; and
(E) electrically conductive microparticles,
wherein the amount of component (B) in the composition is less than 45 mass% based on the entire composition.

EP 4 582 487 A1

## Description

The present invention relates to an electrode layer-forming curable organopolysiloxane composition that forms an electrode layer that has excellent electrical conductivity and minimal temperature dependency of viscoelasticity through a curing reaction, a laminate body including an electrode layer formed using the same, uses thereof, a production method thereof, and a production device.

## BACKGROUND ART

Organopolysiloxane cured materials having a polysiloxane skeletal structure have excellent transparency, electrical insulation, heat resistance, cold resistance, and the like, can have improved electrical activity, if so desired, by introducing a high dielectric functional group such as a fluoroalkyl group or the like, and can be easily processed into a film or sheet. Therefore, the organopolysiloxane cured materials used in various applications such as adhesive films used in various electric and electronic devices and electroactive films used in actuators and other transducer devices are classified into a hydrosilylation reaction curing type, condensation reaction curing type, peroxide curing type, and the like, based on the curing mechanism. In particular, organopolysiloxane cured material films using hydrosilylation reaction curing type curable organopolysiloxane compositions are widely used because they are quick curing when left at room temperature or heated, with no generation of byproducts.

Meanwhile, when an organopolysiloxane cured material film is used as an electronic member such as a touch panel or the like, an electronic component for a display device, and particularly as a transducer material for a sensor, actuator, or the like, an electrode layer must be provided on an electroactive film serving as a dielectric layer. For example, Non-Patent Documents 1 and 2 propose forming an electrode layer with a conductive filler added in a silicone elastomer matrix with excellent flexibility to form an electrode layer with excellent tracking to a dielectric layer.

However, when attempting to form an electrode layer with a conductive filler added on an organopolysiloxane cured film, which is an electroactive film, particularly with displacement of the dielectric layer (e.g., expansion and contraction of actuators, and the like), interface peeling of the dielectric layer and electrode layer may occur, leading to inferior current flow and reduced reliability as an actuator. The present applicants have proposed in Patent Document 1 and the like that an electrode layer, which is an organopolysiloxane cured film, is formed on an electroactive film (=dielectric layer) by applying a curable organopolysiloxane composition containing a conductive filler onto the electroactive film, which is an organopolysiloxane cured film, and have also proposed a laminate body (Patent Document 2) in which a functional group involved in a common curing reaction for forming a chemical bond at the interface is used in a dielectric layer/electrode layer-forming curable organopolysiloxane composition to improve the conformability of the electrode surface, as a transducer material for actuators and the like.

However, in recent years, transducers such as actuators are used in a wide range of temperatures, including low and high temperatures. In particular, even when applied to a transducer with large physical displacement, there is a demand for electrode layers that maintain high electrical conductivity, do not change significantly in viscoelasticity even when used in a wide range of temperatures, including high temperatures of 100°C or higher, and have excellent adhesion to dielectric layers, excellent conformability, and excellent shape retention.

## RELATED ART DOCUMENTS

### [Non-Patent Documents]

Non-Patent Document 1: Kujawski, M.; Pearse, J. D.; Smela, E. Carbon 2010, 48, 2409-2417.
Non-Patent Document 2: Rosset, S.; Shea, H. R. Appl. Phys. A2013, 110, 281-307.

### Patent Documents

Patent Document 1: International Patent Publication WO 2014/105959
Patent Document 2: International Patent Publication WO 2022/004462

## SUMMARY OF THE INVENTION

## PROBLEM TO BE SOLVED BY THE INVENTION

In light of the foregoing, an object of the present invention is to provide an electrode layer-forming composition that can form an electrode layer having viscoelastic properties sufficient for practical use, which can be applied to a variety of processes including an electrode printing process, and an electrode formed thereby will have excellent heat resistance, durability, adhesion to a dielectric layer, conformability and shape retention, without a large change in viscoelasticity even when used across a high temperature range of 100C or more, and that does not have problems with peeling and chipping of the electrode layer, even when used in a transducer that assumes a high degree of physical displacement, such as an actuator. Furthermore, an object is to provide a laminate body containing the composition, use thereof, and a production method.

## MEANS FOR SOLVING THE PROBLEM

As a result of diligent research, the present inventors achieved the present invention and discovered that the aforementioned object can be resolved by an electrode layer-forming curable organopolysiloxane composition, containing: (A) a linear organopolysiloxane having a curing reactive functional group containing a carbon-carbon double bond at least at both ends of the molecular chain; (B) an organopolysiloxane resin containing, in a molecule, siloxane units (M units) expressed by $R_3SiO_{1/2}$ (where R mutually independently represents a monovalent organic group) with a weight average molecular weight of less than 5000 calculated based on standard polystyrene and siloxane units (Q units) expressed by $SiO_{4/2}$; and (E) electrically conductive microparticles, wherein the composition is non-fluid at 25°C, and the amount of component (B) in the composition is less than 45 mass% based on the entire composition. Particularly preferably, the conductive microparticles contain at least one type of conductive carbon selected from carbon nanotubes (CNT), conductive carbon black, graphite and vapor grown carbon fibers (VGCF); the composition includes component (A), component (B), and optionally (BX) an organopolysiloxane resin which contains siloxane units (M units) expressed by $R_3SiO_{1/2}$ (wherein each R independently represents a monovalent organic group) and siloxane units (Q units) expressed by $SiO_{4/2}$ in a molecule and having a weight average molecular weight of less than 5,000 calculated based on standard polystyrene; and the amount of component (A), component (B), and component (BX) in the entire composition is in a range of 50 to 95 mass%, and the mass ratio of component (A) to component (B) is in a range of 100:0 to 50:50.

From the standpoint of achieving the objective, the electrode layer-forming curable organopolysiloxane composition of the present invention can achieve viscoelasticity and excellent electrical conductivity in the resulting electrode layer, so a certain amount of fibrous conductive carbon such as single-walled carbon nanotubes (SWCNT) is particularly preferably used as the (E) conductive microparticles.

Furthermore, the aforementioned problems are also solved by a laminate body having a structure in which (L2) an electrode layer obtained by a curing reaction of the electrode layer-forming curable organopolysiloxane composition is laminated on at least one surface of (L1) an organopolysiloxane cured film, which is a dielectric layer, as well as uses thereof (including a transducer member, a transducer, an electronic component, or a display device).

Furthermore, the aforementioned object can be achieved by a method for producing a laminate body and a method for forming an electrode layer in a transducer member including that production method, the method including: Step I: a step of obtaining an organopolysiloxane cured film as a dielectric layer by curing a curable organopolysiloxane composition that provides a dielectric layer by curing into a film shape; and Step II: a step of applying the electrode layer-forming curable organopolysiloxane composition onto the cured organopolysiloxane film according to Step I or onto a precursor thereof, at the same time as Step I or after Step I, and forming an electrode layer by a curing reaction thereof.

## EFFECT OF THE INVENTION

The present invention can provide an electrode layer-forming composition that can form an electrode layer having viscoelastic properties sufficient for practical use, which can be applied to a variety of processes including printing, and an electrode formed by a curing reaction will have excellent heat resistance, durability, adhesion to a dielectric layer, conformability and shape retention, without a large change in viscoelasticity even when used across a high temperature range of 100°C or more, and that does not have problems with peeling and chipping of the electrode layer, even when used in a transducer that assumes a high degree of physical displacement, such as an actuator. Furthermore, the present invention also provides a laminate body containing the composition, use thereof, and a production method. In particular, the present invention can provide a laminate body that is less susceptible to interfacial peeling with the organopolysiloxane cured film, which is the dielectric layer, even when used in a wide temperature range of 100°C or more, that has excellent reliability in applications such as actuators and the like, and that is free of electrical conductivity problems, and can also provide a method of production.

## DESCRIPTION OF THE PREFERRED EMBODIMENTS

[electrode layer-forming curable organopolysiloxane composition]
First, the electrode layer-forming curable organopolysiloxane composition (hereinafter sometimes referred to as "the present composition") will be described. The present composition contains: (A) a linear organopolysiloxane having a curing reactive functional group containing a carbon-carbon double bond at least at both ends of the molecular chain; (B) an organopolysiloxane resin containing, in a molecule, siloxane units (M units) expressed by $R_3SiO_{1/2}$ (where R mutually independently represents a monovalent organic group) with a weight average molecular weight of less than 5000 calculated based on standard polystyrene and siloxane units (Q units) expressed by $SiO_{4/2}$; and (E) electrically conductive microparticles, wherein the composition is non-fluid at 25°C, and the amount of component (B) in the composition is less than 45 mass% based on the entire composition.

Herein, the amount of organopolysiloxane resin having a large average molecular weight which is the component (B) is small in the present composition, and the use or combined use of an organopolysiloxane resin having an average molecular weight smaller than that of component (B) is allowed. Specifically, the present composition is an electrode layer-forming curable organopolysiloxane composition containing: component (A), component (B), and optionally (BX) an organopolysiloxane resin containing, in a molecule, siloxane units (M units) as expressed by $R_3SiO_{1/2}$ (where R mutually independently represents a monovalent organic group) with a weight average molecular weight of less than 5000 calculated based on standard polystyrene, and siloxane units (Q units) as expressed by $SiO_{4/2}$; wherein the amount of component (A), component (B), and component (BX) in the entire composition are in a range of 50 to 95 mass%, and the mass ratio of component (A) and component (B) is in a range of 100:0 to 50:50.

The present composition preferably has curing reactivity, and in particular, component (A) has a curing reactive functional group containing a carbon-carbon double bond that provides curing reactivity by a hydrosilylation reaction. In addition to component (A), component (B), and component (E), the composition preferably also includes (D) an effective amount of a hydrosilylation reaction catalyst such that the amount of silicon-bonded hydrogen atoms is 0.1 to 1.5 mol per mole of the total amount of carbon-carbon double bonds in (C) the organohydrogenpolysiloxane composition having at least two silicon-bonded hydrogen atoms in the molecule. Furthermore, practically, the composition may further contain a component selected from (F) a reinforcing filler, (G) a curing retarder, and (H) an adhesion promoter.

The electrode layer composed of the organopolysiloxane cured product obtained by the curing reaction of the present composition is particularly excellent in viscoelasticity at high temperatures, and an electrode layer having a shear storage elastic modulus (G') at 110°C in a range of $1.0 \times 10^4$ to $1.5 \times 10^6$ Pa can easily be obtained. In particular, the present composition can suitably provide an electrode layer having a shear storage elastic modulus (G') at 110°C in a range of $2.0 \times 10^4$ to $1.0 \times 10^6$ Pa.

The viscoelasticity at room temperature of the electrode layer obtained by using the present composition is not particularly limited, but after the electrode layer is formed, the shear storage modulus at 25°C (G'25°C) may be in a range of 1.0 x $10^5$ to 7.5 x $10^6$ Pa, and viscoelasticity at room temperature can be achieved in the electrode layer sufficient for practical use. In addition, from the viewpoint of the viscoelasticity of the electrode layer obtained using the present composition, the value of tan $\delta$ of the composition at 25°C. before or after electrode formation (particularly after curing) is particularly preferably 0.30 or more, and the value of tan $\delta$ of the composition before electrode formation is particularly preferably in a range of 0.35 to 0.99. If the viscoelasticity of the present composition or an electrode layer thereof satisfies the above conditions, an electrode layer can be formed with viscoelastic properties sufficient for practical use and which is unlikely to cause problems such as peeling or defects in the electrode layer.

[Component (A)]

Component (A) is a chain-like organopolysiloxane having a curing reactive functional group containing a carbon-carbon double bond at least at both ends of the molecular chain, and is a component that provides good viscoelasticity in the electrode layer obtained by the curing reaction, particularly at high temperatures. Examples of the chain organopolysiloxanes include those having a linear structure or a branched-chain structure having a small number of branching points, but from a practical standpoint, linear organopolysiloxanes are particularly preferred. Use of a highly branched organopolysiloxane is not preferred because achieving heat meltability may not be possible, or the electrode layer might not have viscoelasticity.

Component (A) has curing reactive functional groups containing carbon-carbon double bonds at least at both ends of the molecular chain. The curing reactive functional group containing a carbon-carbon double bond is a curing reactive group selected from an alkenyl group having 2 to 20 carbon atoms, such as a vinyl group or the like; and a (meth) acryl group-containing group, such as a 3-acryloxypropyl group, a 3-methacryloxypropyl group, and the like, and an alkenyl group having 2 to 6 carbon atoms is particularly preferred.

The linear organopolysiloxane in component (A) may contain a group selected from monovalent hydrocarbon groups that do not have a carbon-carbon double bond in a molecule, hydroxyl groups, and alkoxy groups with 1 to 3 carbon

atoms. Furthermore, a portion of the hydrogen atoms of the monovalent hydrocarbon group may be substituted with a halogen atom or a hydroxyl group. Industrially, a methyl group, a phenyl group, a hydroxyl group, and an alkoxy group are preferred.

Preferably, component (A) is a linear organopolysiloxane having a siloxane unit expressed by

$$(Alk)R^2{}_2SiO_{1/2}$$

(where Alk represents an alkenyl group having two or more carbon atoms) on both ends of a molecular chain, and where other siloxane units are essentially only a siloxane unit expressed by $R^2{}_2SiO_{2/2}$. In the formula, $R^2$ is a group selected from the monovalent hydrocarbon groups not having a carbon-carbon double bond, hydroxyl groups, and alkoxy groups. Industrially, methyl groups, phenyl groups, hydroxyl groups, and alkoxy groups are preferred, and all may be methyl groups. Furthermore, the degree of siloxane polymerization of component (A) is within a range of 7 to 1002 including terminal siloxane units, but may be within a range of 102 to 902.

[Component (B) and Component (BX)]

Component (B) is an organopolysiloxane resin having a weight average molecular weight of 5,000 or more calculated in terms of standard polystyrene as measured by GPC (gel permeation chromatography) using an organic solvent such as toluene, xylene, or the like, and having M units and Q units in the molecule. The composition is such that, in addition to the use of component (A), the amount of component (B) used is not more than a certain amount. Component (B) is an MQ-type organopolysiloxane resin having a predetermined or higher molecular weight, and if the amount added is large, the temperature dependency of the viscoelasticity will increase in the electrode layer obtained by the curing reaction of the composition, particularly at high temperatures. On the other hand, when component (B) is used in combination, the heat resistance, durability, adhesion to the dielectric layer, conformability, and shape retention of the electrode may be improved in some cases, so the performance of the electrode layer according to the present invention may be improved in some cases when component (B) is used in an appropriate range.

The first feature of component (B) is being a high molecular weight organopolysiloxane resin having a weight average molecular weight of 5000 or more. From the viewpoint of the temperature dependency of the viscoelasticity of the obtained cured product and the shape retention of the obtained electrode, the weight average molecular weight of component (B) is 5500 or more, or 6000 or more, and industrially, the value may be in a range of 5500 to 100000, or 6000 to 50000.

On the other hand, the weight average molecular weight is less than the above lower limit (in other words, a low molecular weight organopolysiloxane resin), or in other words, the present composition may contain (BX) an organopolysiloxane resin containing siloxane units (M units) expressed by $R_3SiO_{1/2}$ (where each R independently represents a monovalent organic group) having a weight average molecular weight of less than 5000 as calculated based on a polystyrene standard, and siloxane units (Q units) expressed by $SiO_{4/2}$ in the molecule. The molecular weight of component (BX) is small, so even when blended in the electrode layer obtained by the curing reaction of the present composition, the temperature dependency of the viscoelasticity at a high temperature does not become too large, and stable performance may be achieved. In other words, in the present invention, the amount of component (B), which is a high molecular weight organopolysiloxane resin having a molecular weight of a certain level or more, greatly affects the performance of the electrode layer, particularly at high temperature, and blending the low molecular weight component (BX) in a range of 45 mass% or more is allowed.

Component (B) or component (BX) is an organopolysiloxane resin expressed by the following formula that contains siloxane units (M units) expressed by $R_3SiO_{1/2}$ (wherein each R independently represents a monovalent organic group) and siloxane units (Q units) expressed by $SiO_{4/2}$ in each molecule, and may optionally contain siloxane units selected from $R_2SiO_{2/2}$ (D units) and $RSiO_{3/2}$ (T units), and is expressed by the following average unit formula:

$$(R_3SiO_{1/2})p(R_2SiO_{2/2})q(RSiO_{3/2})r(SiO_{4/2})s(XO_{1/2})t$$

R is a monovalent organic group, which may be a curing reactive group containing a carbon-carbon double bond, or may be a group selected from monovalent hydrocarbon groups not having a carbon-carbon double bond in the molecule, hydroxyl groups, or alkoxy groups.

Specifically, examples of the curing reactive group containing a carbon-carbon double bond represented by R include curing reactive groups selected from alkenyl groups having 2 to 20 carbon atoms, such as vinyl groups, allyl groups, butenyl groups, pentenyl groups, hexenyl groups, heptenyl groups, octenyl groups, nonenyl groups, decenyl groups, undecenyl groups, and dodecenyl groups; acrylic groups-containing groups such as 3-acryloxypropyl groups and 4-acryloxybutyl groups; and methacrylic group-containing groups such as 3-methacryloxypropyl groups and 4-methacryloxybutyl groups, and the like.

Similarly, examples of the monovalent hydrocarbon group not having a carbon-carbon double bond represented by R include: alkyl groups such as methyl groups, ethyl groups, propyl groups, butyl groups, pentyl groups, hexyl groups, heptyl groups, octyl groups, nonyl groups, decyl groups, undecyl groups, and dodecyl groups; aryl groups such as phenyl groups, tolyl groups, xylyl groups, naphthyl groups, anthracenyl groups, phenanthryl groups, and pyrenyl groups; aralkyl groups such as benzyl groups, phenethyl groups, naphthyl ethyl groups, naphthyl propyl groups, anthracenyl ethyl groups, phenanthryl ethyl groups, and pyrenyl ethyl groups; and groups obtained by substituting hydrogen atoms of these aryl groups or aralkyl groups with alkyl groups (such as methyl groups and ethyl groups), alkoxy groups (such as methoxy groups and ethoxy groups), or halogen atoms (such as chlorine atoms and bromine atoms).

In the above average unit formula, X represents a hydrogen atom or an alkyl group having 1 to 3 carbon atoms, and OX represents a hydroxyl group or an alkoxy group having 1 to 3 carbon atoms. These hydrolyzable functional groups may be hydroxyl groups remaining in the resin during the synthesis of the organopolysiloxane resin, or may have a structure in which hydroxyl groups in the resin have been blocked by treatment with a silazane compound or the like during synthesis.

Here, p is a positive number, q and r are 0 or positive numbers, s is a positive number, t/(p+q+r+s) is a number within a range of 0 to 0.4, and (p+q)/(r+s) is preferably within a range of 0.5 to 2.0. Organopolysiloxane resins in which q and r are 0, and which are composed only of M units and Q units may be used.

Component (B) or component (BX) in the present invention can be one or more type of organopolysiloxane resin selected from:

(B1) organopolysiloxane resins having a curing reactive group containing a carbon-carbon double bond in each molecule, and

(B2) organopolysiloxane resins not having a curing reactive group containing a carbon-carbon double bond in each molecule.

However, from the viewpoint of improving curing reactivity and temperature dependency of the viscoelasticity of the resulting electrode layer, as well as the shape retention of the dielectric layer, both component (B1) and component (B2) can be included. Specifically, component (B1) and component (B2) may be used in combination at a mass ratio range of 5:95 to 95:5, but are preferably used in a combination at a mass ratio range of 5:95 to 50:50. It should be noted that if component (BX) is included, at least a portion of components (B1) and (B2) are organopolysiloxane resins having a weight average molecular weight of less than 5000, calculated in terms of standard polystyrene.

The organopolysiloxane resin of component (B1) is preferably an alkenyl group-containing organopolysiloxane resin having the aforementioned weight average molecular weight, containing the aforementioned M units and Q units, in which at least a portion of R is an alkenyl group such as a vinyl group or a hexenyl group, and where the amount of vinyl ($CH_2$=CH-) groups is in a range of 1.0 to 5.0 mass%, preferably 1.2 to 3.5 mass%. It should be noted that R groups other than the alkenyl groups are not particularly limited, but from an industrial standpoint, the other R groups may be an alkyl group such as a methyl group, or an aryl group such as a phenyl group, or the like. It should be noted that the preferred ratios and amounts of the M units, Q units and optionally included ($XO_{1/2}$) units are as described above.

The organopolysiloxane resin which is component (B2) is preferably an organopolysiloxane resin having the aforementioned weight average molecular weight, containing the aforementioned M units and Q units, in which R is a group selected from alkyl groups such as a methyl group or aryl groups such as a phenyl group, and which does not contain a curing reactive group containing a carbon-carbon double bond in the molecule. It should be noted that the preferred ratios and amounts of the M units, Q units and optionally included ($XO_{1/2}$) units are as described above.

The composition of the present invention contains component (A), component (B), and optionally component (BX) an organopolysiloxane resin containing siloxane units (M units) expressed by $R_3SiO_{1/2}$ (wherein R are each independently a monovalent organic group) and having a weight average molecular weight of less than 5000 calculated in terms of standard polystyrene, and siloxane units (Q units) expressed by $SiO_{4/2}$ in the molecule, but as described above, either component (B), which is an organopolysiloxane resin having a high molecular weight, is not included, or the amount is less than 45 mass%, and the amount of component (B) in the entire composition is preferably in a range of 0 to less than 45 mass%, 0 to 40 mass%, or 0 to 35 mass%. It should be noted that the weight average molecular weight of component (BX) is less than 5000, preferably in a range of 500 to 4500, or in a range of 1000 to 4000. It should be noted that except for molecular weight, the organopolysiloxane resin may be the same as component (B).

The viscoelasticity of the electrode layer obtained by the curing reaction of the present composition is adjusted to provide excellent durability, adhesion to the dielectric layer, conformability and shape retention, as well as to reduce temperature dependency at high temperatures of 100°C or higher. Therefore, the amount of component (A), component (B), and component (BX) in the entire composition may be in a range of 50 to 95 mass%, preferably 55 to 90 mass%, and more preferably 60 to 90 mass%, and the mass ratio of component (A) to component (B) may be in a range of 100:0 to 50:50, preferably 95:5 to 50:50.

[Component (C)]

Component (C) is a crosslinking agent capable of forming a cured product by a hydrosilylation reaction between curing reactive groups containing a carbon-carbon double bond in component (A) or component (B)/(BX) in the presence of component (D).

Examples of component (C) include 1,1,3-3-tetramethyldisiloxane, 1,3,5,7-tetramethylcyclotetrasiloxane, tris(dimethylhydrogensiloxy)methylsilane, tris(dimethylhydrogensiloxy)phenylsilane, methylhydrogenpolysiloxanes blocked at both ends of a molecular chain with a trimethylsiloxy group, dimethylsiloxane/methylhydrogensiloxane copolymers blocked at both ends of a molecular chain with a trimethylsiloxy group, dimethylpolysiloxane blocked at both ends of a molecular chain with a dimethylhydrogensiloxane group, dimethylsiloxane/methylhydrogensiloxane copolymers blocked at both ends of a molecular chain with a dimethylhydrogensiloxane group, methylhydrogensiloxane/diphenylsiloxane copolymers blocked at both ends of a molecular chain with a trimethylsiloxy group, methylhydrogensiloxane/diphenylsiloxane/dimethylsiloxane copolymers blocked at both ends of a molecular chain with a trimethylsiloxy group, hydrolytic condensates of a trimethylsilane, copolymers containing $(CH_3)_2HSiO_{1/2}$ units and $SiO_{4/2}$ units, copolymers containing $(CH_3)_2HSiO_{1/2}$ units, $SiO_{4/2}$ units, and $(C_6H_5)SiO_{3/2}$ units, and mixtures of two or more types thereof.

The amount of component (C) used may be an amount that provides 0.1 to 5.0 moles, 0.1 to 1.5 moles, or 0.1 to 1.20 moles of silicon-bonded hydrogen atoms per mole of carbon-carbon double bonds in the composition. In particular, when the amount of component (C) used is equal to or less than the upper limit, the mechanical strength and temperature dependency of the cured product can be easily designed to be within a practically appropriate range, and there is an advantage in that an electrode having excellent conformability and shape retention of the electrode layer to the dielectric layer can be easily obtained.

[Component (D)]

Component (D) is a catalyst that promotes the hydrosilylation reaction between component (C) and a curing reactive group containing a carbon-carbon double bond in the composition. Examples of catalysts include platinum-based catalysts, rhodium-based catalysts, palladium-based catalysts, nickel-based catalysts, iridium-based catalysts, ruthenium-based catalysts, and iron-based catalysts, but a platinum-based catalyst is preferable. Examples of platinum based catalysts include platinum based compounds, such as platinum fine powders, platinum black, platinum-supporting silica fine powders, platinum-supporting activated carbon, chloroplatinic acids, alcohol solutions of chloroplatinic acids, olefin complexes of platinum, alkenylsiloxane complexes of platinum, and the like. Alkenylsiloxane complexes of platinum are particularly preferable. Exemplary alkenylsiloxanes include: 1,3-divinyl-1,1,3,3-tetramethyldisiloxane; 1,3,5,7-tetramethyl-1,3,5,7-tetravinylcyclotetrasiloxane; alkenyl siloxanes obtained by substituting a portion of the methyl groups of the alkenylsiloxanes with an ethyl group, a phenyl group, or the like; and alkenylsiloxanes obtained by substituting a portion of the vinyl groups of these alkenylsiloxanes with an allyl group, a hexenyl group, or the like. The platinum-alkenyl siloxane complex has favorable stability, so 1,3-divinyl-1,1,3,3-tetramethyldisiloxane is particularly preferable. Furthermore, the stability of the platinum-alkenylsiloxane complex can be improved. Therefore, 1,3-divinyl-1,1,3,3-tetramethyldisiloxane, 1,3-diallyl-1,1,3,3-tetramethyldisiloxane, 1,3-divinyl-1,3-dimethyl-1,3-diphenyldisiloxane, 1,3-divinyl-1,1,3,3-tetraphenyldisiloxane, and 1,3,5,7-tetramethyl-1,3,5,7-tetravinylcyclotetrasiloxane, or other alkenylsiloxane or dimethylsiloxane oligomers or other organosiloxane oligomers are preferably added to the complex, with an alkenylsiloxane particularly preferably added to the complex. In addition, from the perspective of improving handling workability and pot life of the composition, these hydrosilylation reaction catalysts may be thermoplastic resin particles containing a hydrosilylation reaction catalyst, which are catalysts dispersed or encapsulated in a thermoplastic resin such as a silicone resin, a polycarbonate resin, an acrylic resin, or the like, and particularly may be thermoplastic resin particles including a hydrosilylation reaction catalyst that contains platinum. It should be noted that as the catalyst for promoting the hydrosilylation reaction, a non-platinum-based metal catalyst such as iron, ruthenium, iron/cobalt, or the like may be used.

In particular, when the composition according to the present invention is a composition that forms an electrode upon curing, at least a portion of component (D) may be, and is preferably, (D1) thermoplastic resin microparticles containing a platinum-containing hydrosilylation reaction catalyst, from the perspective of improving stability of the composition during production, ease of handling, and pot life of the composition. Component (D1) may be either microparticles in which a platinum-based hydrosilylation reaction catalyst is dissolved or dispersed in a thermoplastic resin, or microencapsulated microparticles having a structure in which a platinum-based catalyst is contained as a core within a shell of a thermoplastic resin. Examples of platinum catalysts include the alkenylsiloxane complexes of platinum as described above. Furthermore, the thermoplastic resin is not particularly limited so long as the platinum-based catalyst does not substantially permeate at least during production and storage of the present composition and is not substantially soluble in a main component organopolysiloxane of the present composition. However, the softening point or glass transition point of the thermoplastic resin is preferably 80°C or higher, and more preferably 120°C or higher. Specifically, a

silicone resin, a polysilane resin, an epoxy resin, an acrylic resin, and a methyl cellulose polycarbonate resin can be suitably used. The softening point is the temperature at which a resin begins to flow under its own weight or by its own surface tension, and can be measured by a method of observing pulverized particles under a microscope while increasing the temperature at a constant rate. Furthermore, the glass transition point can be measured by a DSC (differential scanning calorimeter). In the present invention, either the softening point or the glass transition point is preferably 120°C or higher. This is because if the softening point or glass transition point of the thermoplastic resin is less than 120°C, there is a concern that the platinum component will begin to elute during the homogeneous mixing step of the present composition, which is described later. Furthermore, the average particle size of the thermoplastic microparticles containing the platinum-based catalyst is not limited, but is preferably in the range of 0.1 to 500 $\mu$m, and more preferably in the range of 0.3 to 100 $\mu$m. This is because preparing thermoplastic resin microparticles containing a platinum-based catalyst with an average particle size that is less than the lower limit of the range above is difficult. On the other hand, dispersibility in the composition is reduced if the average particle size exceeds the upper limit of the range above.

The method for preparing the thermoplastic resin microparticles containing the hydrosilylation reaction catalyst containing platinum is not limited, and examples include conventionally known chemical methods such as interfacial polymerization, in-situ polymerization, and the like, and physical and mechanical methods such as coacervation, drying in liquid, and the like. The drying in liquid method and vapor phase drying method using a spray dryer or the like are particularly desirable because obtaining microcapsule microparticles with a narrow particle size distribution is relatively easy. The microparticles obtained by these methods can be used as is, but the microparticles are preferably washed with an appropriate cleaning solvent to remove the platinum-based catalyst attached to the surface, in order to obtain a composition with excellent storage stability. Herein, an appropriate cleaning solvent does not dissolve the thermoplastic resin, but has a property of dissolving the platinum-based catalyst. Examples of such cleaning solvents include methyl alcohol, ethyl alcohol, and other alcohols, hexamethyldisiloxane and other low molecular weight organopolysiloxanes, and the like. The ratio of hydrosilylation reaction catalyst to thermoplastic resin is not particularly limited, because the value varies greatly depending on the method for manufacturing a granular product, but the ratio is preferably such that the amount of platinum-based catalyst to thermoplastic resin is 0.01 mass% or more. This is because if the amount of platinum-based catalyst is less than 0.01 mass%, the physical properties of the cured product of the present composition will be impaired unless a large amount of thermoplastic resin microparticles containing the platinum-based catalyst is included in the present composition.

The added amount of hydrosilylation-reaction catalyst which is component (D) is preferably an amount such that the metal atoms are within a range of 0.01 to 500 ppm, 0.01 to 100 ppm, or 0.01 to 50 ppm by mass with respect to the entire composition.

Furthermore, a portion or all of component (D) is a hydrosilylation reaction catalyst which does not exhibit activity without irradiation with a high energy beam, but exhibits activity in the composition by irradiation with a high energy beam, or is a so-called high energy beam activation catalyst or photoactivation catalyst. By using such a component (D), the composition as a whole can be cured even at low temperatures triggered by irradiation with a high energy beam, has excellent storage stability, and facilitates reaction control; thus, the properties of excellent handling workability can be achieved.

Examples of high energy beams include UV rays, gamma rays, X-rays, alpha rays, electron beams, and the like. In particular, examples include ultraviolet rays, X-rays, and electron beams irradiated from a commercially available electron beam irradiating device. Of these, ultraviolet rays are preferable from the perspective of efficiency of catalyst activation, and ultraviolet rays within a wavelength range of 280 to 380 nm are preferable from the perspective of industrial use. Furthermore, the irradiation dose varies depending on the type of high energy beam activated catalyst, but in the case of ultraviolet light, the integrated irradiation dose at a wavelength of 365 nm is preferably within a range of 100 $mJ/cm^2$ to 100 $J/cm^2$.

Specific examples of component (D) include trimethyl(methylcyclopentadienyl) platinum (IV), (cyclopentadienyl) trimethyl platinum (IV), (1,2,3,4,5-pentamethyl cyclopentadienyl) trimethyl platinum (IV), (cyclopentadienyl) dimethylethyl platinum (IV), (cyclopentadienyl) dimethylacetyl platinum (IV), (trimethylsilyl cyclopentadienyl) trimethyl platinum (IV), (methoxycarbonyl cyclopentadienyl) trimethyl platinum (IV), (dimethylsilyl cyclopentadienyl) trimethylcyclopentadienyl platinum (IV), trimethyl (acetylacetonato) platinum (IV), trimethyl (3,5-heptanedionate) platinum (IV), trimethyl (methylacetoacetate) platinum (IV), bis(2,4- pentanedionato) platinum (II), bis(2,4-hexanedionato) platinum (II), bis(2,4-heptanedionato) platinum (II), bis(3,5-heptanedionato) platinum (II), bis(1 -phenyl-1,3-butanedionato) platinum (II), bis(1,3-diphenyl-1,3-propanedionato) platinum (II), and bis(hexafluoroacetylacetonato) platinum (II). Of these, (methylcyclopentadienyl) trimethyl platinum (IV) and bis(2,4-pentanedionato) platinum (II) are preferred from the perspective of versatility and ease of acquisition.

The amount of the high energy ray activation catalyst component (D) used is an effective amount and is not particularly limited so long as the amount promotes curing of the composition of the present invention. Specifically, the amount of metal atoms in the catalyst is 0.01 to 1,000 ppm by mass relative to the sum of components (A) to (C) (the total being 100 mass%), and preferably the amount of platinum metal atoms in component (D) is within the range of 0.1 to 500

ppm.

(Component (E))

Component (E) is conductive microparticles, which are not particularly limited as long as they can impart conductivity to an electrode layer formed using the composition of the present invention. It should be noted that an electrode layer containing conductive microparticles has been proposed, for example, in International Patent Publication WO2014/105959 by the present applicants, but there is no disclosure of carbon nanotubes (CNT) in particular.

Specific examples of component (E) include: electrically conductive carbon such as carbon nanotubes (CNT), conductive carbon black, graphite (including graphite coated with a conductive material such as a metal, such as nickel graphite, in the present invention), vapor grown carbon fiber (VGCF), or the like; and metal powders such as platinum, gold, silver, copper, nickel, tin, zinc, iron, aluminum, or the like powders; as well as coated pigments such as antimony-doped tin oxide, phosphorous-doped tin oxide, needle-shaped titanium oxide surface treated using tin/antimony oxide, tin oxide, indium oxide, antimony oxide, zinc antimonate, carbon, and graphite or carbon whiskers surface treated by tin oxide or the like; pigments coated by at least one type of electrically conductive oxide such as tin-doped indium oxide (ITO), fluorine-doped tin oxide (FTO), phosphorous-doped tin oxide, and phosphorous-doped nickel oxide; and pigments having electrical conductivity and containing tin oxide and phosphorous in the surface of titanium oxide particles; these electrically conductive inorganic particles being optionally surface treated using various types of the below described surface treatment agents. These may be used independently or two or more may be used in combination. Furthermore, in order to disperse uniformly in the composition, the conductive microparticles may be kneaded in advance with a portion or all of components (A) to (C) used in the composition, and then blended in the composition in the form of a compound.

Furthermore, the conductive inorganic microparticles may be obtained by coating a conductive material such as a metal or the like on the surface of fibers such as glass fibers, silica alumina fibers, alumina fibers, carbon fibers, and the like, needle shaped reinforcing materials such as aluminum borate whiskers, potassium titanate whiskers, and the like, or inorganic filling materials such as glass beads, talc, mica, graphite, wollastonite, dolomite, and the like.

In the composition of the present invention, at least a portion of component (E) is preferably microparticles containing at least one type of conductive carbon selected from carbon nanotubes (CNT), conductive carbon black, graphite, and vapor grown carbon fiber (VGCF). These conductive microparticles have excellent uniform dispersibility in the organopolysiloxane composition, and have the advantages of imparting excellent temperature dependency to the viscoelasticity of the electrode layer obtained using the electrode layer-forming curable organopolysiloxane composition, as well as effectively improving the conformability and shape retention of the electrode layer relative to the dielectric layer.

In the composition of the present invention, at least a portion or all of component (E) is preferably carbon nanotubes (CNT). The CNT may be single-walled, double-walled, or multi-walled, and the particle size is not particularly limited, but conductive microparticles containing (E1) single-walled carbon nanotubes (SWCNT) are particularly preferred.

Single-walled carbon nanotubes (SWCNT) are a special type of carbon material known as a one-dimensional material. Single-walled carbon nanotubes include sheets of graphene rolled up to form hollow tubes with walls one atom thick. Due to their chemical structure and size, single-walled carbon nanotubes tend to exhibit particularly excellent mechanical, electrical, thermal and optical properties, even as compared to other conductive carbons such as acetylene black. In particular, these nanotubes can effectively reduce the volume resistivity of the electrode layer obtained even when used in small amounts, without impairing the mechanical strength of the electrode layer, such as the elongation at break and tensile strength. This provides the advantage that, in addition to improving the performance and strength of the electrode layer, including improving the energy density, the conformability and shape retention of the electrode layer relative to the dielectric layer can be effectively improved.

The average outer diameter of the single-walled carbon nanotubes is not particularly limited, but is preferably 2.5 nm or less. More preferably, the average outer diameter is from 1.0 to 2.5 nm, more preferably from 1.1 to 2.0 nm, and particularly preferably from 1.2 to 1.8 nm. The average outer diameter of the single-walled carbon nanotubes can be determined from the optical absorption spectrum of the single-walled carbon nanotubes obtained by ultraviolet-visible-near infrared spectroscopy (UV-Vis-NIR), Raman spectroscopy, or transmission electron microscope (TEM) imaging.

The average fiber length of the single-walled carbon nanotubes is preferably less than 100 μm. The thickness of the single-walled carbon nanotubes is more preferably 0.1 to 50 μm, more preferably 0.5 to 20 μm, and particularly preferably 1 to 10 μm. The average fiber length of the single-walled carbon nanotubes can be determined by obtaining an AFM image of the single-walled carbon nanotubes using an atomic force microscope (AFM) or obtaining a TEM image of the single-walled carbon nanotubes using a transmission electron microscope (TEM), measuring the length of all single-walled carbon nanotubes, and dividing the total length by the number of single-walled carbon nanotubes measured.

The G/D ratio of the single-walled carbon nanotubes measured by Raman spectroscopy (wavelength 532 nm) is preferably 2 or more. The G/D ratio is more preferably 2 to 250, even more preferably 5 to 250, particularly preferably 10 to 220, and most preferably 40 to 180. The G/D ratio is the intensity ratio (G/D) of the G band to the D band in the Raman

spectrum of the single-walled carbon nanotube. A higher value for the G/D ratio of the single-walled carbon nanotube indicates higher crystallinity of the single-walled carbon nanotube, as well as fewer carbon impurities and defective carbon nanotubes.

Single-walled carbon nanotubes (SWCNT) are commercially available products. In the present invention, examples include TUBALL(TM) MATRIX 601 (polydimethylsiloxane containing 10 mass% of single-walled carbon nanotubes), TUBALL(TM) MATRIX 602 (vinyl ether-terminated polydimethylsiloxane containing 10 mass% of single-walled carbon nanotubes), TUBALL(TM) MATRIX 201 (fatty acid glycidyl ester containing 10 mass% of single-walled carbon nanotubes), TUBALL(TM) MATRIX 202 (aliphatic carboxylate derivative containing 10 mass% of single-walled carbon nanotubes), TUBALL(TM) MATRIX 204 (methacrylic acid ester derivative containing 10 mass% of single-walled carbon nanotubes), and TUBALL(TM) MATRIX 301 (ethoxylated alcohol containing 10 mass% of single-walled carbon nanotubes) (all manufactured by Kusumoto Chemicals Co., Ltd.).

The conductive microparticles may have surfaces that are partially or entirely treated with an organosilicon compound. Examples of organic silicon compounds include: low molecular weight organic silicon compounds such as silanes, silazanes, siloxanes, and the like; and organic silicon polymers or oligomers such as polysiloxanes, polycarbosiloxanes, and the like. A so-called silane coupling agent is an example of a preferred silane. Typical examples of silane coupling agents include alkyltrialkoxysilanes (such as methyltrimethoxysilane, vinyltrimethoxysilane, hexyltrimethoxysilane, octyltrimethoxysilane, and the like) and trialkoxysilanes containing an organic functional group (such as glycidoxypropyltrimethoxysilane, epoxycyclohexyl ethyltrimethoxysilane, methacryloxypropyltrimethoxysilane, aminopropyltrimethoxysilane, and the like). Examples of preferred siloxanes and polysiloxanes include hexamethyldisiloxanes, 1,3-dihexyl-tetramethyldisiloxanes, trialkoxysilyl single-terminated polydimethylsiloxanes, trialkoxysilyl single-terminated dimethylvinyl single-terminated polydimethylsiloxanes, trialkoxysilyl single-terminated organic functional group single-terminated polydimethylsiloxanes, trialkoxysilyl doubly-terminated polydimethylsiloxanes, organic functional group doubly-terminated polydimethylsiloxanes, and the like. When a siloxane is used, the number "n" of siloxane bonds is preferably within the range of 2 to 150. Furthermore, the siloxane does not necessarily have to be in the main chain, and organic polymers modified with siloxane may also be used, such as silicone-modified acrylic polymers. Examples of preferred silazanes include hexamethyldisilazanes, 1,3-dihexyl-tetramethyldisilazanes, and the like. A polymer having a Si-C-C-Si bond in a polymer main chain is an example of a preferred polycarbosiloxane.

The amount of component (E) added can be appropriately designed depending on the electrical conductivity (in other words, volume resistivity), mechanical strength, shape retention, and the like of the resulting electrode layer. In practice, however, the amount of component (E) conductive microparticles is preferably in a range of 0.003 to 0.50, and more preferably 0.003 to 0.25, based on the volume fraction of the entire composition. Within this range of the added amount of component (E), the volume resistivity of the electrode layer obtained using the present composition is $10^3$ Ω·cm or less, preferably in a range of 10 to $10^3$ Ω·cm, which is advantageous in that an electrode layer exhibiting excellent conductivity can be designed. In particular, when a portion of component (E) is microparticles containing conductive carbon, particularly when a portion of component (E) is single-walled carbon nanotubes (SWCNT), there is an advantage that the volume resistivity of the electrode layer will be effectively reduced to achieve excellent conductivity, and excellent temperature dependency of the viscoelasticity can be achieved without impairing the mechanical strength of the electrode layer, such as the elongation at break and the tensile strength. In particular, the volume fraction of the single-walled carbon nanotubes (SWCNT) relative to the entire composition is preferably in a range of 0.0015 to 0.25.

[Component (F)]

Component (F) is a reinforcing filler, which may improve the mechanical strength of an electrode layer obtained by the curing reaction of the present composition. Specifically, the reinforcing microparticles are preferably one or more types of reinforcing inorganic microparticles having an average primary particle size of less than 50 nm. Examples include fumed silica, wet silica, pulverized silica, calcium carbonate, diatomaceous earth, finely pulverized quartz, various metal oxide powders other than alumina and zinc oxides, glass fibers, carbon fibers, and the like, and those treated with one or more types of organic silicon compounds described below are used. The shape thereof is not particularly limited, with arbitrary shapes including a particle shape, plate shape, needle shape, fibrous shape, and the like capable of being used.

A preferred example of component (F) is hydrophilic or hydrophobic fumed silica or a metal oxide complex thereof, which has an average primary particle size of 10 nm or less, which may be partially aggregated. Furthermore, from the viewpoint of improving dispersibility, fumed silica or a metal oxide complex thereof which has been treated with the aforementioned organosilicon compound is preferred. Two or more types of the reinforcing inorganic particles may be used in combination.

The BET specific surface area of component (F) can be appropriately selected, but may be 10 $m^2/g$ or more, and may be in a range of 10 to 1000 $m^2/g$. Furthermore, as component (F), two or more types of reinforcing fillers having different BET specific surface areas may be used in combination. Examples include (F1) reinforcing microparticles or composites thereof which have been surface-treated with one or more organosilicon compounds with an average BET

specific surface area of more than 100 $m^2/g$, and (F2) reinforcing microparticles or composites thereof which have been surface-treated with one or more organosilicon compounds with an average BET specific surface area in a range of 10 to 100 $m^2/g$, either of which may be used alone as component (F), or components (F1) and (F2) may be used in combination in any mass ratio.

Component (F) is preferably surface-treated with the aforementioned organosilicon compound, and suitable organosilicon compounds include one or more selected from the group consisting of hexamethyldisilazane and 1,3-bis(3,3,3-trifluoropropyl)-1,1,3,3-tetramethyldisilazane. It should be noted that a surface treatment using a surface treating agent other than an organic silicon compound may be used in combination, within a scope that does not impair the technical effects of the present invention.

The amount of the surface treating agent with regard to the total amount of the filler in the surface treatment is preferably within a range of 0.1 mass% or more and 50 mass% or less, and more preferably within a range of 0.3 mass% or more and 40 mass% or less. It should be noted that the treatment amount is preferably proportional to the added amount of fillers to the surface treating agent, with excess treating agent preferably removed after treatment. Furthermore, there is no problem in using additives and the like that promote or assist a reaction when treating if necessary.

[Component (G)]

Component (G) is a curing retarding agent, which may effectively suppress side reactions, particularly when the present composition is cured by a hydrosilylation reaction, and may further improve the storage stability of the composition according to the present invention, the usable time, and the like.

The available cure retardants are not limited in terms of structure or type and can be selected from among known hydrosilylation reaction inhibitors. Examples include 2-methyl-3-butyne-2-ol, 3,5-dimethyl-1-hexyne-3-ol, 2-phenyl-3-butyne-2-ol, 1-ethynyl-1-cyclohexanol, and other alkyne alcohols; 3-methyl-3-pentene-1-yne, 3,5-dimethyl-3-hexene-1-yne, and other enyne compounds; tetramethyltetravinylcyclotetrasiloxane, tetramethyltetrahexenylcyclotetrasiloxane, and other alkenyl group-containing low molecular weight siloxanes; and methyl tris(1,1-dimethyl propynyloxy)silane, vinyl tris(1,1-dimethyl propynyloxy)silane, and other alkynyloxysilanes.

The amount of component (G) used is arbitrary, but is preferably in the range of 1 to 10000 ppm in mass units with respect to the entire composition.

[Component (H)]

Component (H) is an adhesion imparting agent, and examples include organic silicon compounds having at least one alkoxy group bonded to a silicon atom in one molecule. Examples of the alkoxy group include methoxy groups, ethoxy groups, propoxy groups, butoxy groups, and methoxyethoxy groups, with methoxy groups being particularly preferable. Furthermore, examples of groups bonded to a silicon atom other than the alkoxy groups in the organic silicon compound include: halogen-substituted or unsubstituted monovalent hydrocarbon groups such as alkyl groups, alkenyl groups, aryl groups, aralkyl groups, halogenated alkyl groups, and the like; glycidoxyalkyl groups such as 3-glycidoxypropyl groups, 4-glycidoxybutyl groups, and the like; epoxycyclohexylalkyl groups such as 2-(3,4-epoxycyclohexyl)ethyl groups, 3-(3,4-epoxycyclohexyl)propyl groups, and the like; epoxyalkyl groups such as 3,4-epoxybutyl groups, 7,8-epoxyoctyl groups, and the like; acrylic group-containing monovalent organic groups such as 3-methacryloxypropyl groups and the like; and hydrogen atoms. This organic silicon compound preferably has a group that may react with an alkenyl group or a silicon atom-bonded hydrogen atom in the present composition, and specifically, preferably has a silicon atom-bonded hydrogen atom or an alkenyl group. Furthermore, favorable adhesion can be imparted to various base materials, and thus this organic silicon compound preferably has at least one epoxy group-containing monovalent organic group in one molecule. Examples of such organic silicon compounds include organosilane compounds, organosiloxane oligomers, and alkyl silicates. Examples of molecular structures of this organosiloxane oligomer or alkyl silicate include linear structures, partially branched linear structures, branched structures, cyclic structures, and network structures, of which linear structures, branched structures, and network structures are particularly preferable. Examples of the organic silicon compound include: silane compounds such as 3-glycidoxypropyltrimethoxysilane, 2-(3,4-epoxycyclohexyl) ethyltrimethoxysilane, 3-methacryloxypropyltrimethoxysilane, and the like; siloxane compounds having at least one silicon atom-bonded alkenyl group or silicon atom-bonded hydrogen atom and one silicon atom-bonded alkoxy group in one molecule; mixtures of a silane compound or siloxane compound having at least one silicon atom-bonded alkoxy group and a siloxane compound having at least one silicon atom-bonded hydroxy group and one silicon atom-bonded alkenyl group in one molecule; reaction mixtures of amino group-containing organoalkoxysilane and epoxy group-containing organoalkoxysilane; organic compounds having at least two alkoxysilyl groups in one molecule and containing bonds other than a silicon-oxygen bond between these silyl groups; epoxy group-containing silanes expressed by the general formula:

$$R^a_nSi(OR^b)_{4-n}$$

(wherein, $R^a$ represents an organic group containing a monovalent epoxy group, while $R^b$ represents an alkyl group having from 1 to 6 carbon atoms, or a hydrogen atom. n represents a number within the range of 1 to 3), reaction mixtures of a vinyl group-containing siloxane oligomer (including a chain or ring-shaped structure), and an epoxy group-containing trialkoxysilane, methyl polysilicate, ethyl polysilicate, and epoxy group-containing ethyl polysilicate. The adhesion imparting agent is preferably in the form of a low viscosity liquid, and the viscosity thereof is not limited, but is preferably within the range of 1 to 500 mPa·s at 25°C. Furthermore, while not limited thereto, the amount of the adhesion imparting agent is preferably within the range of 0.01 to 10 parts by mass with respect to a total of 100 parts by mass of the present composition.

In the present invention, a reaction mixture of an organoalkoxysilane containing an amino group and an organoalkoxysilane containing an epoxy group is an example of a particularly preferable adhesion imparting agent. These components improve the initial adhesion to various base materials with which the composition comes into contact during the formation of the electrode layer obtained using the composition (after heat melting and during curing), and in particular, low-temperature adhesion to unwashed adherends. Such a reaction mixture is disclosed in Japanese Examined Patent Publication 52-8854 and Japanese Unexamined Patent Application 10-195085.

Examples of alkoxysilanes having an amino group-containing organic group forming such component include an aminomethyltriethoxysilane, 3-aminopropyltrimethoxysilane, 3-aminopropyltriethoxysilane, 3-aminopropylmethyldimethoxysilane, N-(2-aminoethyl)aminomethyltributoxysilane, N-(2-aminoethyl)-3-aminopropyltrimethoxysilane, N-(2-aminoethyl)-3-aminopropylmethyldimethoxysilane, and 3-anilinopropyltriethoxysilane.

Furthermore, examples of epoxy group-containing organoalkoxysilanes include 3-glycidoxypropyltrimethoxysilanes, 3-glycidoxypropylmethyldimethoxysilanes, 2-(3,4-epoxy cyclohexyl)ethyltrimethoxysilanes, and 2-(3,4-epoxy cyclohexyl)ethylmethyldimethoxysilanes.

The ratio of the alkoxysilane having an amino group-containing organic group to the alkoxysilane having an epoxy group-containing organic group is, in terms of molar ratio, preferably within the range of (1:1.5) to (1:5), and particularly preferably within the range of (1:2) to (1:4). This component can be easily synthesized by mixing an alkoxysilane having an amino group-containing organic group and alkoxysilane having an epoxy group-containing organic group as described above to cause a reaction at room temperature or by heating.

In particular, when an alkoxysilane having an amino group-containing organic group is reacted with an alkoxysilane having an epoxy group-containing organic group by the method described in Japanese Unexamined Patent Application Publication H10-195085, the composition of the present invention particularly preferably contains a carbasilatrane derivative obtained by cyclizing by an alcohol exchange reaction and expressed by the general formula:

[Chem. Fig. 1]

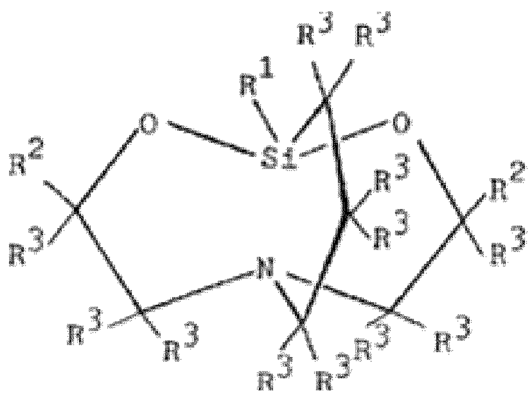

{where $R^1$ represents an alkyl group, an alkenyl group, or an alkoxy group, and $R^2$ represents the same or different groups selected from the group consisting of groups expressed by the general formula:

[Chem. Fig. 2]

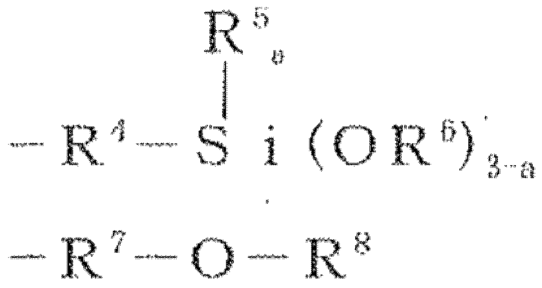

(where $R^4$ represents an alkylene group or alkyleneoxyalkylene group, $R^5$ represents a monovalent hydrocarbon group, $R^6$ represents an alkyl group, $R^7$ represents an alkylene group, $R^8$ represents an alkyl group, alkenyl group, or acyl group, and "a" represents 0, 1, or 2.), and
$R^3$ represents the same or different hydrogen atoms or alkyl groups}. Examples of such carbasilatrane derivatives include carbasilatrane derivatives having a silicon atom-bonded alkoxy group or a silicon atom-bonded alkenyl group in one molecule expressed by the following structure:

[Chem. Fig. 3]

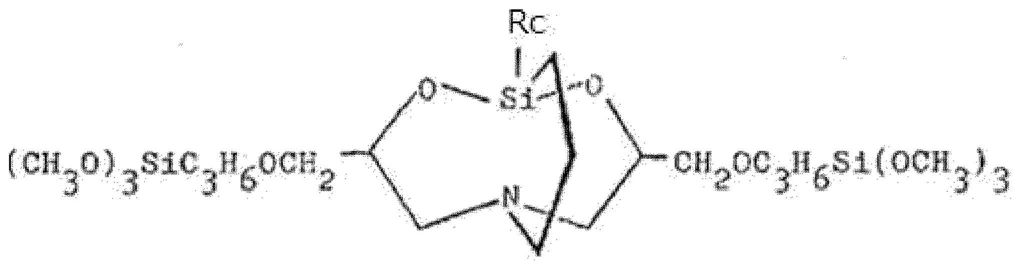

(where Rc represents a group selected from methoxy groups, ethoxy groups, vinyl groups, allyl groups, and hexenyl groups.)

Furthermore, in the present invention, a silatrane derivative expressed by the following structural formula may be used as the adhesion imparting agent.

[Chem. Fig. 4]

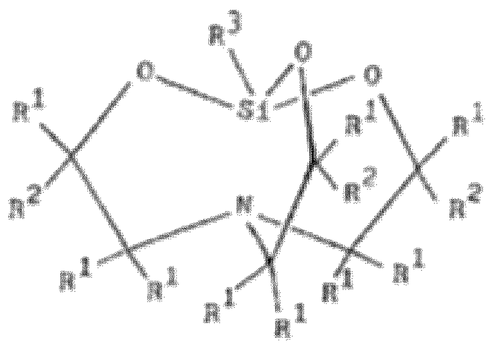

In the formula, $R^1$ represents the same or different hydrogen atom or alkyl group, with $R^1$ particularly preferably being a hydrogen atom or a methyl group. In addition, $R^2$ in the above formula is the same or different group selected from among the group consisting of a hydrogen atom, an alkyl group, and an alkoxysilyl group-containing organic group represented by the general formula:$-R^4-Si(OR^5)_xR^6_{(3-x)}$, provided that at least one $R^2$ is this alkoxysilyl group-containing organic group. Examples of alkyl groups $R^2$ include methyl groups and the like. Furthermore, in the alkoxysilyl group-containing organic group of $R^2$, $R^4$ in the formula represents a divalent organic group. Examples thereof include alkylene groups and alkyleneoxyalkylene groups, with ethylene groups, propylene groups, butylene groups, methylene oxypropylene groups,

and methylene oxypentylene groups being preferable. Furthermore, $R^5$ in the formula represents an alkyl group having 1 to 10 carbon atoms, and preferably a methyl group or an ethyl group. Furthermore, $R^6$ in the formula represents a substituted or unsubstituted monovalent hydrocarbon group, and preferably a methyl group. Furthermore, in the formula, x represents 1, 2, or 3, and preferably 3.

Examples of such alkoxysilyl group-containing organic groups of $R^2$ include the following groups:

$-(CH_2)_2Si(OCH_3)_2(CH_2)_2Si(OCH_3)_2CH_3$

$-(CH_2)_3Si(OC_2H_5)_2(CH_2)_3Si(OC_2H_5)(CH_3)_2$

$-CH_2O(CH_2)_3Si(OCH_3)_3$

$-CH_2O(CH_2)_3Si(OC_2H_5)_3$

$-CH_2O(CH_2)_3Si(OCH_3)_2CH_3$

$-CH_2O(CH_2)_3Si(OC_2H_5)_2CH_3$

$-CH_2OCH_2Si(OCH_3)_2CH_2OCH_2Si(OCH_3)(CH_3)_2$

$R^3$ in the formula above represents at least one group selected from the group consisting of substituted or unsubstituted monovalent hydrocarbon groups, alkoxy groups having 1 to 10 carbon atoms, glycidoxyalkyl groups, oxiranylalkyl groups, and acyloxyalkyl groups. Examples of monovalent hydrocarbon groups of $R^3$ include alkyl groups such as methyl groups and the like. Examples of alkoxy groups of $R^3$ include methoxy groups, ethoxy groups, propoxy groups, and the like. Examples of glycidoxypropyl groups of $R^3$ include 3-glycidoxypropyl groups and the like. Examples of oxiranylalkyl groups of $R^3$ include 4-oxiranylbutyl groups, 8-oxiraniloctyl groups, and the like. Examples of acyloxyalkyl groups of $R^3$ include acetoxypropyl groups, 3-methacryloxypropyl groups, and the like. In particular, $R^3$ preferably represents an alkyl group, an alkenyl group, or an alkoxy group, and more preferably an alkyl group or an alkenyl group, and particularly preferred examples thereof include groups selected from methyl groups, vinyl groups, allyl groups, and hexenyl groups.

The amount of component (H) used is not particularly limited, but from the perspective of improving adhesion to the dielectric layer or the like, the amount is preferably in the range of 0.1 to 1.0 mass% of the total composition, with 0.2 to 1.0 mass% being more preferred.

[Use of Solvent]

The electrode layer-forming curable organopolysiloxane composition of the present invention can be designed to have heat-melting properties or flowability at room temperature, and the use of a solvent is substantially unnecessary, enabling the design to be solvent-free. In addition, no fluorine-based solvents, organic solvents, or the like remain in the film obtained by curing, which provides the advantages of eliminating environmental load problems and the effects of solvents on electronic devices. However, this does not preclude the use of organic solvents which are inevitably mixed into the raw materials of the composition of the present invention, or small amounts of organic solvents, from the viewpoint of handling. Specifically, the composition of the present invention may be, and is preferably, a low-solvent to solvent-free composition containing an organic solvent in an amount of 5 parts by mass or less, preferably 1 part by mass or less, and more preferably below the detection limit, relative to the sum (100 parts by mass) of components (A), (B), and (E). It should be noted that examples of the solvent include one or more organic solvents selected from (S1) organic polar solvents, (S2) low molecular weight siloxane-based solvents, and (S3) halogen-based solvents, or mixed solvents thereof, and in particular, solvents having a boiling point of 80°C or higher and lower than 200°C can be exemplified.

The composition of the present invention is most preferably in the form of a solvent-free composition where the amount of the organic solvent is 1 part by mass or less, or the detection limit or less, and thus the composition is substantially free of organic solvent.

Furthermore, the present composition may contain, as other optional components: iron oxide (red iron oxide), cerium oxide, cerium dimethylsilanolate, fatty acid cerium salts, cerium hydroxide, zirconium compounds, and other heat-resistant agents, dyes, non-white pigments, flame retardancy-imparting agents, aluminum hydroxide, magnesium hydroxide, zinc borate, zinc molybdate, phosphazene, and other heat reducers, hydrotalcite, bismuth oxides, yttrium oxides, and other ion scavengers and pH adjusters, aluminum hydroxide, magnesium hydroxide, zinc borate, zinc molybdate, phosphazene, and other flame retardants, hindered phenol compounds, hindered amine compounds, thioether compounds, and other antioxidants, pure iron, silicon steel, iron-cobalt alloy, iron-nickel alloy, iron-chromium

alloy, iron-aluminum alloy, carbonyl iron, stainless steel, composite materials containing one or more thereof, and other soft magnetic particles, inorganic flame retardants (such as aluminum hydroxide and other hydrated metal compounds), halogenated flame retardants, phosphorus-based flame retardants, organometallic salt-based flame retardants, silicone oil, silicone rubber, polyisoprene, 1,2-polybutadiene, 1,4-polybutadiene, and other polybutadienes, styrene-butadiene rubber, acrylonitrile-butadiene rubber, butadiene acrylonitrile rubber blocked with a carboxyl group at an end, polychloroprene, poly(oxypropylene), poly(oxytetramethylene) glycol, polyolefin glycol, poly-ε-caprolactone, and other thermoplastic elastomers, polysulfide rubber, fluoroelastomer, and other stress reducing agents, barium titanate ($BaTiO_3$), strontium titanate ($SrTiO_3$), lead zirconate titanate ($Pb(Zr, Ti)O_3$, PZT), alumina ($Al_2O_3$, aluminum oxide), zirconia ($ZrO_2$, zirconium dioxide), magnesia (MgO, magnesium oxide), silica ($SiO_2$, silicon dioxide), titania ($TiO_2$, titanium dioxide), aluminum nitride (AlN), silicon nitride ($Si_3N_4$), silicon carbide (SiC), Barium calcium titanate zirconate (BCTZ), polyvinylidene fluoride, and other dielectric ceramics, copper chloride, cuprous iodide, copper acetate, cerium stearate, and other metal salt stabilizers, hindered amine-based organic compounds, hindered phenol-based organic compounds, sulfur-containing compound-based organic compounds, acrylate-based organic compounds, and phosphorus-based organic compounds, and other antioxidants and heat stabilizers; benzophenones, salicylates, benzotriazoles, and other UV absorbers, weathering agents, light stabilizers, and the like, so long as the object of the present invention is not impaired. If the present composition has heat-melting properties, an organic wax may be blended in for the purpose of improving the hot-melt properties.

[Use of the composition: formation of electrode layer]

The present composition has fluidity when heated and melted, and can be applied uniformly to desired locations. Furthermore, an electrode layer can be formed by the curing process. Therefore, the composition can be used without restriction in solvent-free processes and electrode printing processes, aimed at reducing the environmental load and improving the performance of actuators, and the like. Furthermore, the present composition has excellent formability, gap-filling properties, and adhesive strength, and the electrode layer obtained has excellent heat resistance, durability, adhesion, and low temperature dependency of the viscoelastic properties, particularly at high temperature. Therefore, when an electrode layer made of the present composition is formed on a dielectric elastomer sheet, the electrode layer has remarkably excellent conformability and shape retention, and even when used in a transducer that assumes a high degree of physical displacement, such as an actuator, the electrode layer is unlikely to peel off or have defects, and has viscoelastic properties sufficient for practical use.

The composition has curing reactivity and can be applied to a location where an electrode layer is to be formed. Furthermore, a curing reaction can be allowed to proceed simultaneously with or after the application, thereby forming an electrode layer made of a cured product. When components (C) and (D) are used, the curing reaction is a hydrosilylation reaction, and depending on the type of component (D), a heat curing reaction, a curing reaction by irradiation with a high-energy beam, or a combination thereof can be selected.

The heat curing reaction temperature is not particularly limited, but is preferably 50°C or higher and 200°C or lower, more preferably 60°C or higher and 200°C or lower, and even more preferably 80°C or higher and 180°C or lower. Furthermore, the time required for the curing reaction is usually from 1 second to 3 hours. Generally, the cured product can be obtained by being maintained at a temperature within a range of 90 to 180°C for 10 seconds to 30 minutes. It should be noted that, as described above, when thermoplastic resin microparticles containing a platinum-containing hydrosilylation reaction catalyst and using a thermoplastic resin having a specific softening point or glass transition point are selected as component (D), the curing reaction does not proceed at temperatures below the softening point or glass transition point of the thermoplastic resin (wall material), but proceeds rapidly by heating at a temperature higher than that temperature. This has the advantage that the curing reaction can be easily controlled by temperature.

When at least a portion of component (D) is the aforementioned high-energy beam-activated catalyst, the curing reaction of the present composition proceeds when triggered by irradiation with a high-energy beam. Examples of active energy rays that may be used in the curing reaction include ultraviolet rays, electron beams, radiation, and the like. Ultraviolet rays are preferable in terms of practicality. If the curing reaction is performed using ultraviolet rays, a catalyst for the hydrosilylation reaction having high activity to ultraviolet rays is used, for example, a bis(2,4-pentanedionato)platinum complex or a (methylcyclopentadienyl)trimethylplatinum complex is preferably added. The ultraviolet ray generating source is preferably a high-pressure mercury lamp, a medium-pressure mercury lamp, an Xe-Hg lamp, a deep UV lamp, or the like. The irradiation amount in this case is preferably 100 to 8,000 $mJ/cm^2$.

The thickness and shape of the electrode layer can be appropriately designed as desired, but if the electrode layer has the aforementioned volume resistivity (conductivity), the form is that of a thin film, and the average thickness thereof may be preferably in a range of 1 to 100 $\mu m$.

The electrode layer obtained by the above curing reaction has low temperature dependency of the viscoelastic properties, particularly at high temperature, and because the electrode layer is a cured product, the mechanical strength of the electrode layer itself, as well as adhesion and conformability to the base material, tend to be further improved.

Furthermore, the use of an electrode layer that is a cured product has the advantage of having particularly excellent conformability and shape retention. In addition, the curing reaction is easy to control, so flexible process design including solvent-free processes is possible.

[Use of the composition: laminate body and dielectric layer]

The electrode layer obtained using the present composition can be used in desired semiconductor members and electronic components, and can be used without particular restriction in electronic components such as semiconductor chips, electronic circuits, and semiconductor (including optical semiconductor) devices, and can form a laminate body including the electrode layer. In particular, an electrode layer obtained using the present composition will have excellent formability, gap-filling properties, and adhesive strength when heated and melted, and the electrode layer obtained has excellent heat resistance, durability, adhesion, and temperature dependency of the viscoelastic properties. Therefore, when an electrode layer made of the present composition is formed on a dielectric elastomer sheet, the electrode layer has remarkably excellent conformability and shape retention, and even when used in a transducer that assumes a high degree of physical displacement, such as an actuator, an electrode layer that is unlikely to peel off or have defects can be formed. It should be noted that the type of dielectric elastomer sheet is not particularly limited, but a dielectric layer which is a cured organopolysiloxane film is particularly preferred in terms of the mechanical strength, heat resistance, flexibility, and electrochemical properties.

Specifically, the laminate body provided with an electrode layer obtained using the present composition is preferably a laminate body having a structure in which (L2) an electrode layer made of the aforementioned electrode layer-forming curable organopolysiloxane composition is laminated on at least one surface of (L1) an organopolysiloxane cured film, which is a dielectric layer.

Organopolysiloxane cured products having a polysiloxane skeletal structure have excellent transparency, electrical insulation, heat resistance, cold resistance, and the like, can have improved electrical activity, if desired, by introducing a high dielectric functional group such as a fluoroalkyl group or the like, and can be easily processed into a film or sheet, and therefore can be used as a dielectric layer, particularly as an adhesive film used in various electric and electronic devices or as an electroactive film used in actuators and other transducer devices.

The curing mechanism of the organopolysiloxane cured film is classified into hydrosilylation reaction curing types, condensation reaction curing types, peroxide curing types, and the like, but an organopolysiloxane cured film using a curable organopolysiloxane composition of the hydrosilylation reaction curing type is particularly preferred because the film cures quickly when left at room temperature or when heated, and does not generate by-products.

The organopolysiloxane cured film which is the dielectric layer is a thin film, and the average thickness of the film is suitably within a range of 1 to 200 μm, preferably 1 to 150 μm, and more preferably 1 to 100 μm. Herein, the average thickness of the film is the average value of the thickness at the center of the film. Preferably, the organopolysiloxane cured film is uniform and flat, with the difference between the thickness at one end and the thickness at the center being within 5.0% in the width direction of the film. The average value of the thickness of the center of the film is more preferably within a range of 5 to 200 μm.

Similarly, when the number of internal defects in the organopolysiloxane cured film serving as the dielectric layer is measured by optical means within a unit area of 15 mm × 15 mm at any location, the number of internal defects is in a range of 0 to 20, and preferably in the range of 0 to 15. When the number of internal defects exceeds the aforementioned upper limit, dielectric breakdown is more likely to occur when a high voltage is applied on the film, and thus the dielectric breakdown strength of the entire film may be significantly reduced.

The organopolysiloxane cured film, which is the dielectric layer, has a dielectric breakdown strength measured at room temperature that is within a range of 56 V/μm to 200 V/μm, and more preferably 58 V/μm to 100 V/μm. Furthermore, the organopolysiloxane cured film of the present invention may be easily designed so that the relative dielectric constant of the entire film at 1 kHz and 25°C is 3 or more, 4 or more, 5 or more, or 6 or more, by adding an appropriate amount of a highly dielectric functional group such as a fluoroalkyl group, using a highly dielectric filler, and the like.

The organopolysiloxane cured product film, which is the dielectric layer, can be designed to have the following mechanical properties measured when heated and molded into a sheet having a thickness of 2.0 mm, based on JIS K 6249.

(1) The Young's modulus (MPa) at room temperature is 10 MPa or less, particularly preferably within a range of 0.1 to 2.5 MPa.
(2) The tear strength (N/mm) at room temperature is 1 N/mm or higher, particularly preferably within a range of 2 N/mm or higher.
(3) The tensile strength (MPa) at room temperature is 1 MPa or higher, particularly preferably within a range of 2 MPa or higher.
(4) The elongation at break (%) can be 50% or higher, particularly preferably within a range of 100 to 1000%.

When the organopolysiloxane cured film, which is the dielectric layer, is used in an application as an electronic material such as a touch panel and the like, electronic member for a display device, and particularly a transducer material such as a sensor or the like, the shear storage modulus at 23°C is preferably within a range of $10^3$ to $10^5$ Pa, more preferably $1.0 \times 10^3$ to $5.0 \times 10^4$ Pa.

As described above, the organopolysiloxane cured film, which is the dielectric layer, has an average thickness within the range of 1 to 200 μm per sheet, but a plurality of films may be superimposed to form a laminated film having a thickness of more than 200 μm, for the purpose of forming the dielectric layer.

[Formation of the laminate body]

The laminate body can be preferably obtained, for example, by the method for producing a laminate body, including:

Step I: a step of obtaining an organopolysiloxane cured film as a dielectric layer by curing a curable organopolysiloxane composition that provides a dielectric layer by curing into a film shape; and

Step II: a step of applying the electrode layer-forming curable organopolysiloxane composition, onto the organopolysiloxane cured film or a precursor thereof, which has been subjected to Step **I,** to form an electrode layer, simultaneously with or after Step I. The method for applying the electrode layer-forming curable organopolysiloxane composition in step II is not particularly limited, and any known application means such as a dispenser can be appropriately used depending on the properties of the composition and the desired shape of the electrode layer. Furthermore, the formation of the electrode layer may optionally include a heat melting step, and includes the formation of an electrode layer that is a cured product by a curing reaction of the composition after application.

In particular, when the curing reaction for forming the dielectric layer in step I and the formation of the electrode layer in step II are curing reactions accompanied by the formation of a cured product, and these curing reactions both include a hydrosilylation reaction, a structure can be provided in which both layers are chemically bonded to each other at the interface between the dielectric layer and the electrode layer by a hydrosilylation reaction, and the conformability and shape retention of the electrode layer of the present invention to the dielectric layer can be further improved, and peeling of the electrode layer and the occurrence of defects can be suppressed by selecting compositions in which the number of silicon-bonded hydrogen atoms in the organohydrogenpolysiloxane components are different from one another relative to 1 mol of the total amount of carbon-carbon double bonds in the curable organopolysiloxane composition for forming the dielectric layer or the electrode layer-forming curable organopolysiloxane composition.

As one example, the SiH/Vi ratio ($[SiH/Vi]_{Elec}$) of the electrode layer-forming curable organopolysiloxane composition of the present invention is particularly preferably 0.2 mol or more and 1.5 mol or less, preferably 0.3 mol or more and 1.2 mol or less, and more preferably 0.3 mol or more and 1.0 mol or less, and the SiH/Vi ratio ($[SiH/Ni]_{DEAP}$) of the curable organopolysiloxane composition forming the dielectric layer is particularly preferably such that the value of $[SiH/Vi]_{Elec}/[SiH/Vi]_{DEAP}$ is in a range of 0.20 to 0.90, 0.33 to 0.85, 0.50 to 0.75, or 0.58 to 0.67. In other words, combinations in which the compositions forming the dielectric layer have some SiH excess are particularly preferable. When these curable organopolysiloxane compositions are cured by a hydrosilylation reaction, an excess amount of SiH groups present on the dielectric layer side at the interface is likely to undergo a hydrosilylation reaction with the curable reactive groups containing a carbon-carbon double bond in the electrode layer-forming curable organopolysiloxane composition at the interface between the two layers, facilitating provision of a structure in which the two layers are chemically bonded. The production method is particularly useful as a method for forming an electrode layer in a transducer member, and can industrially easily provide a laminate body, electronic component, or display device member, in which the dielectric layer and electrode layer are firmly joined, and thus peeling or defect problems due to lack of adhesive strength and tracking are less likely to occur.

The laminate body of organopolysiloxane cured films according to the present invention is useful as an electronic material, a member for a displaying device, and a member for a transducer (including sensors, speakers, actuators, and generators), and can be particularly preferably used as an electroactive film (including high dielectric films) provided with an electrode layer, an electronic component or a member for a displaying device. Furthermore, as described above, an electroactive film having high dielectric breakdown strength is suitable for transducer components such as actuators in the form of a single layer or laminate film, and the electrode layer according to the present invention can be formed on a dielectric layer without particular restriction, even in a solvent-free process involving heat melting or an electrode printing process. The electroactive film also has the characteristics of having extremely excellent conformity and shape retention with respect to the organopolysiloxane cured film, which is the dielectric layer, and being unlikely to cause problems such as peeling of the electrode layer, and is therefore particularly useful for actuator applications that start up under high voltage.

It should be noted that the organopolysiloxane cured film laminate body according to the present invention

preferably has a whole or partial structure in which an electrode layer is provided on one side of the dielectric layer, these layers are alternately laminated, and the electrode layer is provided on the outer side. Furthermore, the laminate body of the present invention may have an electrode layer of the present invention and a single or multilayered dielectric layer, as well as a pressure-sensitive adhesive layer used for placing in a transducer, or a non-silicone thermoplastic resin layer that may optionally have a release surface.

EXAMPLES

The present invention will be described below by way of examples; however, the present invention is not limited thereto. The following compounds were used in the examples shown below.

- Component (a1-1): Dimethylsiloxane polymer (amount of vinyl groups: 0.09 mass%, degree of siloxane polymerization: 835) blocked at both ends with a vinyldimethylsiloxy group
- Component (a1-2): Dimethylsiloxane polymer (amount of vinyl groups: 1.53 mass%, degree of siloxane polymerization: 45) blocked at both ends with a vinyldimethylsiloxy group
- Component (a1-3): Dimethylsiloxane polymer (amount of vinyl groups: 0.14 mass%, degree of siloxane polymerization: 537) blocked at both ends with a vinyldimethylsiloxy group
- Component (a1-4): Dimethylsiloxane polymer (amount of vinyl groups: 0.24 mass%, degree of siloxane polymerization: 300) blocked at both ends with a vinyldimethylsiloxy group
- Component (a2): 3,3,3-trifluoropropylmethyl, dimethylsiloxane copolymer (amount of vinyl groups: 0.26 mass%, siloxane polymerization degree: 193) blocked at both ends with a vinyldimethylsiloxy group
- Component (b-1): A vinyl-containing MQ resin composed of trimethylsiloxy units (M), vinyldimethylsiloxy units (ViM), and tetrafunctional siloxy units (Q, $SiO_{4/2}$) (vinyl group content: 1.9 mass%, polystyrene-equivalent weight average molecular weight Mw = 2.4 x $10^4$ measured by GPC (gel permeation chromatography) using tetrahydrofuran as a solvent)
- Component (b-2): MQ resin composed of trimethylsiloxy units (M) and tetrafunctional siloxy units (Q, $SiO_{4/2}$) (polystyrene-equivalent weight average molecular weight Mw = 6.4 x $10^3$, measured by GPC using toluene as a solvent)
- Component (bx): MQ resin composed of trimethylsiloxy units (M) and tetrafunctional siloxy units (Q, $SiO_{4/2}$) (polystyrene-equivalent weight average molecular weight Mw = 3.4 x $10^3$, measured by GPC using toluene as a solvent)
- Component (f1): Fumed silica treated with hexamethyldisilazane and dimethylsiloxy-methylvinylsiloxy-siloxane copolymer, blocked on both ends with hydroxydimethylsiloxy groups (CAB-O-SIL MS-75)
- Component (f2): Fumed silica treated with hexamethyldisilazane and 1,3-bis(3,3,3-trifluoropropyl)-1,1,3,3-tetramethyldisilazane (product name prior to treatment: AEROSIL® 200, BET specific surface area: 200 $m^2/g$)
- Component (f3): Fumed silica treated with hexamethyldisilazane and 1,3-bis(3,3,3-trifluoropropyl)-1,1,3,3-tetramethyldisilazane (product name prior to treatment: AEROSIL® 50, BET specific surface area: 50 $m^2/g$)
- Component (c1): Dimethylsiloxane polymer blocked at both ends with a dimethyhydrosiloxy group (amount of silicon-bonded hydrogen: 0.123 mass%)
- Component (c2): Dimethylsiloxy-methylhydrosiloxy-siloxane copolymer blocked at both ends with a trimethylsiloxy group (amount of silicon-bonded water: 0.71 mass%)
- Component (c3): Dimethylsiloxane polymer blocked at both ends with a dimethyhydrosiloxy group (amount of silicon-bonded hydrogen: 0.015 mass%)
- Component (c4): Dimethylsiloxane / 3,3,3- trifluoropropylmethylsiloxane / methylhydrogen siloxane copolymer blocked at both ends by a trimethylsiloxsane group (amount of silicon-bonded hydrogen: approximately 0.23 mass%)
- Component (c5): Dimethylsiloxane / 3,3,3- trifluoropropylmethylsiloxane copolymer blocked at both ends by a dimethyhydrosiloxy group (amount of silicon-bonded hydrogens: approximately 0.014 mass%)
- Component (d1): Masterbatch containing platinum catalyst-containing thermoplastic resin microparticles (*) Masterbatch containing platinum catalyst-containing microparticles (platinum metal concentration: 0.16 mass%) prepared by the method described in the Reference Example below.
- Component (d2): Dimethyl siloxane polymer solution blocked at both ends by a vinyldimethylsiloxy group of a platinum-1,3-divinyl 1,1,3,3-tetramethyldisiloxane complex (platinum concentration approximately 0.6 mass%)

[Reference example (Preparation of masterbatch containing platinum catalyst-containing thermoplastic resin microparticles)]

900 g of bisphenol A thermoplastic polycarbonate resin (glass transition temperature (Tg) 145°C; wall material), 500 g of toluene, and 4600 g of dichloromethane were placed in a flask equipped with a stirrer, and mixed uniformly. 44.4 g

of a divinyltetramethyldisiloxane solution of platinum (zero valence) divinyltetramethyldisiloxane complex (platinum metal concentration: 5 mass%) was added and mixed to obtain a homogeneous solution. This solution was sprayed and dried using a spray dryer using a hot nitrogen gas stream to obtain 450 g of spherical platinum catalyst-containing thermoplastic resin microparticles (average particle size: 1.1 μm).

Next, 40 parts by mass of the above platinum catalyst-containing thermoplastic resin microparticles were mixed with 60 parts by mass of dimethylpolysiloxane having a viscosity of 350 mPa·s and a vinyl group content of 0.47 mass%, both ends of the molecular chain of which were blocked with dimethylvinylsiloxy groups, to prepare a master batch containing platinum catalyst-containing microparticles. The concentration of platinum metal in the master batch was 0.16 mass%.

<Conductive filler>

- Component (e1): Carbon filler (PRINTEX(TM) XE2 B)
- Component (e2): Single-walled carbon nanotubes (SWCNT, 10 mass% in dimethylsiloxane polymer capped with trimethylsiloxy groups at both ends, TUBALL™ MATRIX 601)
- Component (e3): Acetylene black (manufactured by DENKA COMPANY LIMITED, 100% pressed product)

<Hydrosilylation Reaction Inhibitor>

- Component (g1): 1-ethynylcyclohexanol
- Component (g2): 1,3,5,7-tetramethyl-1,3,5,7-tetravinyl-cyclotetrasiloxane

[Examples 1 to 4 and Comparative examples 1 to 3]

Table 1 shows the compositions of the experimental tests of the examples and comparative examples. The numerical value corresponding to each component is in mass%, and the sum thereof is 100 mass%. Furthermore, in the following examples, component (c) was used in an amount such that the amount of silicon-bonded hydrogen atoms (Si-H) was 0.35 to 1.0 mol per mole of vinyl groups (unsaturated hydrocarbon groups, the same applies hereinafter) in the composition. Furthermore, Tables 1 and 2 show the physical properties before or after curing measured by the following methods.

[Examples 5 to 18 and Comparative Examples 4 to 5]

Tables 2 and 3 show the compositions of Examples 5 to 18 and Comparative Examples 4 to 5, respectively. The numerical value corresponding to each component is in mass%, and the sum thereof is 100 mass%. The silicon atom-bonded hydrogen atoms (Si-H) of component (c) were used in a range of 0.87 to 0.93 mols per 1 mol of vinyl groups in the composition. Furthermore, Tables 2 and 3 show the physical properties before or after curing measured by the following methods.

[Volume fraction of each component]

In the present invention, the true density at 25°C of each component in the composition was defined as follows, and the volume fraction was calculated. The density of component (b) was 1.23 g/cc, the density of component (f) was 2.20 g/cc, the density of component (e1) was 2.00 g/cc, the density of the single-walled carbon nanotubes (SWCNT) in component (e2) was 1.58 g/cc, and the density of the other components was 0.98 g/cc.

[Mw of component (b)]

The Mw when component (b) was blended and used was calculated as follows.

$$Mw = \sum_{k=1}^{n}(Mwk \times wfk)$$

(1)

In the above formula (1), Mwk and wfk are the Mw of the kth component (b) and the weight fraction in all of component (b), respectively.

[Embodiments 1 to 4 and Comparative Examples 1 to 3]

All ingredients except for component (d1) were weighed into a 300 cc wide-mouth glass sample bottle and then heated in an oven at 125°C for approximately 30 minutes. Thereafter, the mixture was mixed with an electric stirrer on a hot plate heated to 180°C for 30 minutes or more while scraping off any deposits on the walls of the sample bottle. After cooling, component (d1) was added, and the mixture was mixed with an electric stirrer on a hot plate heated to 120°C for 30 minutes or more while similarly scraping the mixture. The mixture was then transferred to a 100 cc HDPE container and heated in an oven at 110°C for 10 minutes or more. The mixture was removed from the oven and mixed for at least 4 minutes using a Thinky mixer (ARE-310) at a rotation speed of 2000 RPM.

[Sample preparation of Embodiments 5 to 18 and Comparative Examples 4 to 6]

For all the comparative examples except for Comparative Example 6, the components (a), (b1), (f1), and (e) were charged into a 100 cc HDPE container and mixed for 4 minutes or more at a rotational speed of 2000 RPM using a Thinky mixer (ARE-310). After the appearance of the mixture was confirmed to be uniform, components (c) and (g) were added and mixed under the same conditions. After cooling, component (d2) was added last, and mixing was performed for 2 minutes or more at a rotational speed of 1200 RPM in a vacuum using a Thinky mixer (ARV-310LED).

Comparative Example 6 was performed in the same manner as above, except that the components other than component (d2) were mixed in the same manner.

[Embodiments 1 to 4 and Comparative Examples 1 to 3]

[Viscoelasticity measurements for Examples 1 to 4 and Comparative Examples 1 to 3]

Measurements were performed using a viscoelasticity measuring device (Anton Paar GmbH, model number MCR302). An appropriate amount of each curable composition was placed on a lower plate having a Peltier element temperature control system heated to 120°C, and a parallel plate having a diameter of 15 mm was used to set the thickness of the sample to about 1.5 mm. Under conditions of a frequency of 1 Hz and a strain of 0.1%, the specimen was cooled at 3°C per minute to -20°C, then heated to 150°C and held for 180 minutes to cure. Furthermore, the cooling and heating was repeated once more. The storage modulus (G') and loss tangent (tan δ) before and after curing at 25°C and 110°C (first and second heating) are shown in Tables 1 and 2.

[Viscoelasticity measurement of Examples 5 to 18 and Comparative Examples 4 to 6]

Measurements were performed using a viscoelasticity measuring device (Anton Paar GmbH, model number MCR302). A sample was set to a thickness of approximately 0.5 mm at 25°C using a parallel plate with a diameter of 15 mm on a lower plate having a Peltier element temperature control system. Under conditions of a frequency of 1 Hz and a strain of 0.1%, the temperature was raised at 3°C per minute up to 110°C, and the material was maintained at this temperature for 60 minutes or more to induce curing. The storage modulus (G') and loss tangent (tan δ) after curing 45 minutes after the start of heating are presented in Tables 2 to 5.

[Preparation of Cured Products of Examples 1 to 4 and Comparative Examples 1 to 3 and 6]

For all the samples except Comparative Example 6, a mold 50 mm long x 50 mm wide x 2 mm thick was placed on a metal plate, and a PTFE film (thickness: 150 micrometers) was placed thereon. An appropriate amount of each composition was placed on a PTFE film and heated in an oven at 120°C for 30 minutes or more. After removing from the oven, a PTFE film was placed on top of the composition, and the composition was further sandwiched between metal plates. Thereafter, the coating was press cured at 150°C for 15 minutes and then post cured in an oven at 150°C for 45 minutes to obtain a sheet-like cured product. For Comparative Example 6, a mold measuring 50 mm in length, 30 mm in

width, and 6 mm in thickness was used, and the sample was similarly sandwiched between metal plates without being heated, press-cured at 120°C for 15 minutes, and then post-cured in an oven at 120°C for 45 minutes to obtain a block-shaped cured product.

[Volume resistivity (VR) measurement of cured products of Examples 1 to 4 and Comparative Examples 1 to 3]

Measurement was performed at about 25°C using a LORESTA-GP MCP-T610 (PSP probe, manufactured by Mitsubishi Chemical Analytech). The calculation was performed using a correction factor based on the sample shape.

[VR Measurement of Examples 5 to 18 and Comparative Examples 4 to 5]

<Example electrode coating on PET sheet base material>

Each composition was diluted with a silicone solvent OS-20 (DOW PERFORMANCE SILICONE) to the concentration shown in Table 2, and then bar coated onto a 200 micrometer thick PET film using an 80 micrometer thick Nitoflon spacer (manufactured by Nitto Denko Corporation) (area: approximately 70 mm x 100 mm). After coating, the solvent was distilled off at 60°C in vacuum for about half a day. The coated composition was then covered with a PET-based release liner film and pressed using a 2 kg roller. The release liner film was peeled off and the substrate was heated in an oven at 120°C for 1 hour to form an electrode layer approximately 10 to 30 micrometers thick. The VR values measured by the aforementioned method are shown in Tables 2 to 5.

[VR measurement during biaxial stretching in Example 17 and Comparative Example 6]

<Base material DEAP sheet>

A liquid curable organopolysiloxane composition was prepared by mixing the aforementioned component (a2) at 68.34 mass%, component (c4) at 5.06 mass%, component (c5) at 5.06 mass%, component (d2) at 0.10 mass%, component (f2) at 18.69 mass%, component (f3) at 2.46 mass%, and component (g2) at 0.28 mass%. In this case, component (d) was used in an amount such that the silicon-bonded hydrogen atom (Si-H): (SiH/unsaturated hydrocarbon group)$_{DEAP}$ was about 1.2 moles per mole of unsaturated hydrocarbon groups in the composition. The organopolysiloxane cured product obtained after curing at 110°C for 1 hour had a Shore A hardness of 37. The sheet used had a thickness of about 100 μm.

<Example electrode coating on base material DEAP sheet>

Each composition was diluted with a silicone solvent OS-20 (DOW PERFORMANCE SILICONE) at the concentration shown in Table 4 or 5, and an electrode layer having a diameter of 30 mm and a thickness of approximately 10 to 25 micrometers was formed using a spray gun under the same conditions as those used for the VR measurement in Examples 5 to 18.

<Biaxial Stretching of Electrode Layer>

The initial radius was set to 1, and the stretch ratio (λ) was incrementally increased to 1.12, 1.22, 1.32, and 1.41, and then incrementally decreased. After each λ was reached, the sample was left for at least 1 minute, and the VR value was measured by the method described above. The results are shown in Table 6.

[Table 1]

| Example No. | Example 1 | Example 2 | Example 3 | Example 4 | Comparative example 1 | Comparative example 2 | Comparative example 3 |
|---|---|---|---|---|---|---|---|
| Component (a1-1) | 84.24 | | 51.19 | 40.31 | 23.72 | 2504 | 29.57 |
| Component (a1-2) | | 28.32 | | | | | |
| Component (b1) | | | 10.49 | 14.01 | 19.37 | 19.38 | 17.49 |
| Component (b2) | | | 19.47 | 26.03 | 35.98 | 36.00 | 32.49 |
| Component (bx) | | 54.95 | | | | | |
| Component (c1) | | | 3.50 | 4.30 | 5.57 | 4.23 | 5.10 |

(continued)

| Example No. | | Example 1 | Example 2 | Example 3 | Example 4 | Comparative example 1 | Comparative example 2 | Comparative example 3 |
|---|---|---|---|---|---|---|---|---|
| Component (c3) | | 0.41 | 1.38 | | | | | |
| Component (d1) | | 0.24 | 0.24 | 0.24 | 0.24 | 0.24 | 0.24 | 0.24 |
| Component (e2) | | 15.11 | 15.11 | 15.11 | 15.11 | 15.11 | 15.11 | 15.11 |
| Component (g1) | | 0.01 | 0.01 | 0.01 | 0.01 | 0.01 | 0.01 | 0.01 |
| SiH/Vi | | 1.00 | 0.60 | 0.46 | 0.46 | 0.46 | 0.35 | 0.46 |
| Volume fraction of single-walled carbon nanotubes (SWCNT) in component (e2) | | 0.009 | 0.011 | 0.010 | 0.010 | 0.011 | 0.011 | 0.010 |
| Volume fraction of component B | | 0 | 0.50 | 0.26 | 0.35 | 0.50 | 0.50 | 0.45 |
| Component B Mw | | NA | $3.4\times10^3$ | $1.3\times10^4$ | $1.3\times10^4$ | $1.3\times10^4$ | $1.3\times10^4$ | $1.3\times10^4$ |
| G' 25°C (Pa) | Before curing | $1.3\times10^4$ | $3.7\times10^4$ | $7.0\times10^4$ | $8.9\times10^4$ | $2.8\times10^5$ | $3.7\times10^5$ | $1.8\times10^5$ |
| | After curing | $6.8\times10^4$ | $9.2\times10^4$ | $2.9\times10^5$ | $6.1\times10^5$ | $2.7\times10^0$ | $2.1\times10^6$ | $1.8\times10^6$ |
| tan δ 25°C | Before curing | 0.27 | 0.27 | 0.24 | 0.25 | 0.71 | 0.95 | 0.43 |
| | After curing | 0.26 | 0.23 | 0.25 | 0.26 | 0.37 | 0.46 | 0.32 |
| G' 110°C (Pa) | Before curing | $9.8\times10^3$ | $2.1\times10^4$ | $4.6\times10^4$ | $5.1\times10^4$ | $6.2\times10^4$ | $4.9\times10^4$ | $6.9\times10^4$ |
| | After curing | $6.3\times10^4$ | $5.6\times10^4$ | $1.5\times10^5$ | $2.4\times10^5$ | $4.0\times10^5$ | $3.3\times10^5$ | $4.4\times10^5$ |
| tan δ 110°C | Before curing | 0.16 | 0.20 | 0.21 | 0.22 | 0.29 | 0.35 | 0.25 |
| | After curing | 0.18 | 0.17 | 0.23 | 0.27 | 0.44 | 0.45 | 0.36 |
| Before curing G'110°C/G'25°C | | 0.75 | 0.57 | 0.66 | 0.57 | 0.22 | 0.13 | 0.38 |
| After curing G'110°C/G'25°C | | 0.93 | 0.61 | 0.52 | 0.39 | 0.15 | 0.16 | 0.24 |
| VR/ Ω·cm | | $5.0\times10^1$ | $1.5\times10^1$ | $4.4\times10^1$ | $9.1\times10^1$ | $6.3\times10^1$ | $1.9\times10^2$ | $9.2\times10^1$ |

[Table 2]

| Embodiment No. | 5 | 6 | 7 |
|---|---|---|---|
| Component (a1-1) | 45.69 | 45.69 | 45.69 |
| Component (a1-3) | 25.62 | 24.36 | 24.33 |
| Component (b1) | 3.75 | 3.75 | 3.75 |
| Component (f1) | 16.78 | 16.78 | 16.78 |
| Component (c2) | 0.67 | 0.67 | 0.67 |
| Component (c3) | 2.60 | 2.58 | 2.58 |
| Component (d2) | 0.10 | 0.10 | 0.10 |

(continued)

| Embodiment No. | 5 | 6 | 7 |
|---|---|---|---|
| Component (e1) | 1.35 | 3.40 | 1.35 |
| Component (e2) | 3.40 | 2.64 | 4.71 |
| Component (q1) | 0.04 | 0.04 | 0.04 |
| SiH/Vi | 0.93 | 0.93 | 0.93 |
| Volume fraction of component (b1) | 0.034 | 0.034 | 0.034 |
| Volume fraction of component (f1) | 0.084 | 0.085 | 0.084 |
| Volume fraction of component (e1) | 0.007 | 0.019 | 0.007 |
| Volume fraction of single-walled carbon nanotubes (SWCNT) in component (e2) | 0.0024 | 0.0019 | 0.0033 |
| Component (b1) Mw | $2.4 \times 10^4$ | $2.4 \times 10^4$ | $2.4 \times 10^4$ |
| G'110°C (Pa) | $1.1\times10^5$ | $2.9\times10^4$ | $8.5\times10^4$ |
| tan $\delta$ 110°C | 0.16 | 0.36 | 0.19 |
| Solution weight concentration (wt.%) | 45 | 45 | 40 |
| VR/ $\Omega\cdot$cm | $6.0\times10^2$ | $8.8\times10^2$ | $1.1\times10^2$ |

[Table 3]

| Embodiment No. | 8 | 9 | 10 | 11 | 12 |
|---|---|---|---|---|---|
| Component (a1-1) | 45.72 | 40.92 | 37.48 | 41.18 | 45.65 |
| Component (a1-3) | 24.28 | 28.59 | 32.65 | 28.28 | 25.43 |
| Component (b1) | 3.75 | 3.75 | 3.75 | 3.75 | 3.75 |
| Component (f1) | 16.79 | 16.22 | 14.57 | 16.35 | 16.76 |
| Component (c2) | 0.67 | 0.67 | 0.68 | 0.67 | 0.67 |
| Component (c3) | 2.58 | 2.59 | 2.61 | 2.58 | 2.60 |
| Component (d2) | 0.10 | 0.10 | 0.10 | 0.10 | 0.10 |
| Component (e1) | 0.00 | 2.40 | 3.40 | 1.35 | 0.00 |
| Component (e2) | 6.07 | 4.71 | 4.71 | 5.70 | 5.00 |
| Component (g1) | 0.04 | 0.04 | 0.04 | 0.04 | 0.04 |
| SiH/Vi | 0.93 | 0.93 | 0.93 | 0.93 | 0.93 |
| Volume fraction of component (b1) | 0.033 | 0.034 | 0.033 | 0.033 | 0.033 |
| Volume fraction of component (f1) | 0.083 | 0.081 | 0.073 | 0.082 | 0.083 |
| Volume fraction of component (e1) | 0.000 | 0.013 | 0.019 | 0.007 | 0.000 |
| Volume fraction of single-walled carbon nanotubes (SWCNT) in component (e2) | 0.0042 | 0.0033 | 0.0033 | 0.0040 | 0.0035 |
| Component (b1) Mw | $2.4 \times 10^4$ | $2.4 \times 10^4$ | $2.4 \times 10^4$ | $2.4 \times 10^4$ | $2.4 \times 10^4$ |
| G'110°C (Pa) | $6.9\times10^4$ | $2.7\times10^4$ | $2.5\times10^4$ | $4.1\times10^4$ | $8.6\times10^4$ |
| tan $\delta$ 110°C | 0.19 | 0.33 | 0.34 | 0.26 | 0.17 |
| Solution weight concentration (wt.%) | 45 | 40 | 40 | 40 | 37.5 |
| VR/ $\Omega\cdot$cm | $4.6\times10^1$ | $7.0\times10^2$ | $2.8\times10^3$ | $5.1\times10^2$ | $3.9\times10^2$ |

[Table 4]

| Embodiment No. | 13 | 14 | 15 | 16 | 17 | 18 |
|---|---|---|---|---|---|---|
| Component (a1-1) | 44.81 | 28.17 | 28.04 | 26.58 | 28.53 | 25.43 |
| Component (a1-3) | 23.54 | 23.54 | 38.71 | 38.71 | 39.47 | 38.71 |
| Component (b1) | 3.75 | 3.75 | 3.75 | 10.00 | 0.00 | 13.48 |
| Component (f1) | 16.59 | 10.11 | 10.05 | 3.70 | 13.67 | 0.00 |
| Component (c2) | 0.66 | 0.64 | 0.68 | 1.00 | 0.45 | 1.29 |
| Component (c3) | 2.54 | 2.46 | 2.64 | 3.87 | 1.74 | 4.96 |
| Component (d2) | 0.10 | 0.10 | 0.10 | 0.10 | 0.10 | 0.10 |
| Component (e1) | 0.00 | 0.00 | 0.00 | 0.00 | 0.00 | 0.00 |
| Component (e2) | 7.97 | 16.01 | 16.00 | 16.00 | 16.00 | 16.00 |
| Component (g1) | 0.04 | 0.04 | 0.04 | 0.04 | 0.04 | 0.04 |
| SiH/Vi | 0.93 | 0.93 | 0.93 | 0.87 | 0.93 | 0.93 |
| Volume fraction of component (b1) | 0.033 | 0.032 | 0.032 | 0.084 | 0.000 | 0.111 |
| Volume fraction of component (f1) | 0.082 | 0.048 | 0.048 | 0.017 | 0.066 | 0.000 |
| Volume fraction of component (e1) | 0.000 | 0.000 | 0.000 | 0.000 | 0.000 | 0.000 |
| Volume fraction of single-walled carbon nanotubes (SWCNT) in component (e2) | 0.0055 | 0.0107 | 0.0107 | 0.0104 | 0.0108 | 0.0103 |
| Component (b1) Mw | $2.4 \times 10^4$ | $2.4 \times 10^4$ | $2.4 \times 10^4$ | $2.4 \times 10^4$ | $2.4 \times 10^4$ | $2.4 \times 10^4$ |
| G'110°C (Pa) | $7.9\times10^4$ | $7.1\times10^4$ | $2.2\times10^5$ | $2.8\times10^5$ | $1.2\times10^5$ | $3.5\times10^5$ |
| tan $\delta$ 110°C | 0.18 | 0.19 | 0.09 | 0.08 | 0.13 | 0.06 |
| Solution weight concentration (wt%) | 36 | 23 | 25 | 25 | 25 | 25 |
| VR/Ω·cm | $9.8\times10^1$ | $1.3\times10^1$ | $1.5\times10^1$ | $1.8\times10^1$ | $1.4\times10^1$ | $1.1\times10^1$ |

[Table 5]

| Comparative Example No. | 4 | 5 | 6 |
|---|---|---|---|
| Component (a1-1) | 45.68 | 45.69 | |
| Component (a1-3) | 24.38 | 24.37 | |
| Component (a1-4) | | | 74.75 |
| Component (b1) | 3.75 | 3.75 | |
| Component (f1) | 16.78 | 16.78 | |
| Component (c2) | 0.67 | 0.67 | 0.90 |
| Component (c3) | 2.58 | 2.58 | 6.98 |
| Component (d2) | 0.10 | 0.10 | 0.10 |
| Component (e1) | 4.68 | 4.33 | |
| Component (e2) | 1.35 | 1.70 | |
| Component (e3) | | | 16.95 |
| Component (q1) | 0.04 | 0.04 | 0.25 |
| Component (g2) | | | 0.07 |
| SiH/Vi | 0.93 | 0.93 | 0.80 |
| Volume fraction of component (b1) | 0.034 | 0.034 | 0 |

(continued)

| Comparative Example No. | 4 | 5 | 6 |
|---|---|---|---|
| Volume fraction of component (f1) | 0.085 | 0.085 | 0 |
| Volume fraction of component (e1) | 0.026 | 0.024 | 0 |
| Volume fraction of single-walled carbon nanotubes (SWCNT) in component (e2) | 0.0010 | 0.0012 | 0 |
| Component (b1) Mw | $2.4 \times 10^4$ | $2.4 \times 10^4$ | - |
| G'110°C (Pa) | $2.4\times10^4$ | $1.7\times10^4$ | $6.2\times10^4$ |
| tan $\delta$ 110°C | 0.44 | 0.47 | 0.11 |
| Solution weight concentration (wt%) | 45 | 45 | 10 |
| VR/ $\Omega\cdot$cm | $1.2\times10^4$ | $1.8\times10^5$ | $1.8\times10^2$ |

[Table 6]

| Stretching ratio ($\lambda$) during VR measurement | VR/ $\Omega\cdot$cm | |
|---|---|---|
| | (Example No. 19) | (Comparative Example No. 6) |
| 1.12 | $1.7\times10^1$ | $4.0\times10^2$ |
| 1.22 | $2.5\times10^1$ | $9.1\times10^2$ |
| 1.32 | $2.6\times10^1$ | $1.5\times10^3$ |
| 1.41 | $2.9\times10^1$ | $2.9\times10^3$ |
| 1.32 | $1.9\times10^1$ | * |
| 1.22 | $1.8\times10^1$ | * |
| 1 | $1.6\times10^1$ | * |
| * Not measured due to a large change in the VR value during biaxial stretching. | | |

[Summary]

As described above, in Examples 1 to 4, the amount of component (b) does not exceed a predetermined amount, so the temperature dependency of the viscoelasticity of the cured product is small. On the other hand, in Comparative Examples 1 to 3, component (b) is blended in an amount exceeding a predetermined amount, so the temperature dependency of the viscoelasticity of the cured product will be high. In particular, if the amount of component (b) in the electrode-forming curable composition of the present invention exceeds a predetermined amount, there is a strong concern that the viscoelasticity of the electrode layer is liable to vary depending on the temperature when the operating temperature of the device increases or decreases in practical use, and thus the performance of the electrode layer varies or becomes unstable. It should be noted that in Comparative Example 2, the Mw of component (bx) is small, and even when formulated such that the volume fraction is 0.5, the temperature dependency of the viscoelasticity will be low. In other words, by selectively using a component having a small value of Mw as the component (bx), a composition can be designed with practically sufficient performance and small temperature dependency of viscoelasticity of the electrode layer obtained by curing, even when a predetermined amount or more of an organopolysiloxane resin component is blended.

In Examples 5 to 18, the viscoelasticity was found to be adjustable to an appropriate level by heating and curing under the condition that the amount of component (b) does not exceed a predetermined amount. In all of the examples, a predetermined amount of electrically conductive particles (e) is present, in particular, single-walled carbon nanotubes (SWCNT) (e2). As compared to Comparative examples 4 and 5, the volumetric fraction of (e2) is equal to or higher than a predetermined amount in all of the examples. Therefore, VR after curing is kept low. In addition, the value of VR clearly hardly changes during biaxial stretching using Example 17. On the other hand, in Comparative example 6 containing only component (e3), the value of VR significantly changed during biaxial stretching. Therefore, in the examples, optimized compositions according to the present invention are expected to exhibit high performance when used in electrodes for various transducer applications including actuators.

## Claims

1. An electrode layer-forming curable organopolysiloxane composition, comprising:

   (A) a linear organopolysiloxane having a curing reactive functional group containing a carbon-carbon double bond at least at both ends of the molecular chain;
   (B) an organopolysiloxane resin containing, in a molecule, siloxane units (M units) expressed by $R_3SiO_{1/2}$ (where R mutually independently represents a monovalent organic group) with a weight average molecular weight of less than 5000 calculated based on standard polystyrene and siloxane units (Q units) expressed by $SiO_{4/2}$; and
   (E) electrically conductive microparticles,

   wherein the amount of component (B) in the composition is less than 45 mass% based on the entire composition.

2. The electrode layer-forming curable organopolysiloxane composition according to claim 1, wherein the conductive microparticles are microparticles containing at least one type of conductive carbon selected from the group consisting of carbon nanotubes (CNT), conductive carbon black, graphite, and vapor grown carbon fibers (VGCF).

3. The electrode layer-forming curable organopolysiloxane composition according to claim 1, wherein the conductive microparticles are microparticles containing single-walled carbon nanotubes (SWCNT).

4. The electrode layer-forming curable organopolysiloxane composition according to claim 1, wherein the volume fraction of conductive microparticles relative to the entire composition is in a range of 0.003 to 0.50, and the volume resistivity of an electrode layer obtained using the present composition is $10^3$ Ω·cm or less.

5. The electrode layer-forming curable organopolysiloxane composition according to claim 1, comprising: component (A), component (B), and optionally (BX) an organopolysiloxane resin containing, in a molecule, siloxane units (M units) as expressed by $R_3SiO_{1/2}$ (where R mutually independently represents a monovalent organic group) with a weight average molecular weight of less than 5000 calculated based on standard polystyrene, and siloxane units (Q units) as expressed by $SiO_{4/2}$;
   wherein the amount of components (A), (B) and (BX) in the entire composition are in a range of 50 to 95 mass%, and the mass ratio of component (A) and component (B) is in a range of 100:0 to 50:50.

6. The electrode layer-forming curable organopolysiloxane composition according to claim 1, comprising:

   (A1) a linear organopolysiloxane having a curing reactive functional group containing a carbon-carbon double bond at least at both ends of the molecular chain;
   (B) an organopolysiloxane resin having a weight average molecular weight of 5000 or higher in terms of a polystyrene standard, and containing siloxane units (M units) expressed by $R_3SiO_{1/2}$ (where each R independently represents a monovalent organic group) and siloxane units (Q units) expressed by $SiO_{4/2}$ in each molecule;
   (C) an organohydrogenpolysiloxane having at least two silicon-bonded hydrogen atoms in each molecule in an amount such that the amount of silicon-bonded hydrogen atoms in the composition is 0.1 to 1.5 mol per mole of total carbon-carbon double bonds in the composition;
   (D) an effective amount of a hydrosilylation reaction catalyst;
   (E1) conductive microparticles containing single-walled carbon nanotubes (SWCNT); and
   (F) reinforcing filler,
   wherein the volume fraction of single-walled carbon nanotubes (SWCNT) relative to the total composition is in a range of 0.0015 to 0.25.

7. The electrode layer-forming curable organopolysiloxane composition according to claim 6, wherein at least a portion of component (C) is (C1) an organohydrogenpolysiloxane having silicon-bonded hydrogen atoms only at both ends of the molecular chain, and the amount of silicon -bonded hydrogen atoms in component (C) is 0.1 to 1.20 mol per mole of the total number of carbon-carbon double bonds in the composition.

8. The electrode layer-forming curable organopolysiloxane composition according to claim 1, wherein the electrode layer made of the organopolysiloxane cured product obtained by the curing reaction has a shear storage modulus (G') at 110°C of $1.0 \times 10^4$ to $1.5 \times 10^6$ Pa.

9. A laminate body, having

a structure in which two or more layers of organopolysiloxane cured film having mutually different compositions are laminated, wherein
(L2) an electrode layer obtained by a curing reaction of the organopolysiloxane composition according to any one of claims 1 to 8 is laminated on at least one surface of (L1) an organopolysiloxane cured film which is a dielectric layer.

**10.** The laminate body according to claim 9, having a structure where the dielectric layer which is an organopolysiloxane cured film and the electrode layer are chemically bonded at an interface thereof;

(L1) the organopolysiloxane cured film, a dielectric layer, being a cured film obtained by curing with a hydrosilylation reaction, and
(L2) the electrode layer being obtained by a curing reaction of the electrode layer-forming curable organopolysiloxane composition according to any one of claims 1 to 8.

**11.** A transducer member, comprising the laminate body according to claim 9 or claim 10.

**12.** A transducer, comprising the laminate body according to claim 9 or claim 10.

**13.** An electronic component or a display device, comprising the laminate body according to claim 9 or claim 10.

**14.** The method for producing the laminate body according to claim 9 or claim 10, the method comprising:

Step I: a step of obtaining an organopolysiloxane cured film as a dielectric layer by curing a curable organopolysiloxane composition that provides a dielectric layer by curing into a film shape; and
Step II: a step of applying the electrode layer-forming curable organopolysiloxane composition according to any one of claims 1 to 8 onto the cured organopolysiloxane film according to Step I or onto a precursor thereof, at the same time as Step I or after Step I, and forming an electrode layer by a curing reaction thereof.

**15.** A method for producing an electrode layer in a transducer member, comprising the method for producing a laminate body according to claim 14.

# INTERNATIONAL SEARCH REPORT

International application No.
**PCT/JP2023/035043**

**A. CLASSIFICATION OF SUBJECT MATTER**

***C08L 83/07***(2006.01)i; ***B32B 27/00***(2006.01)i; ***B32B 27/18***(2006.01)i; ***C08K 3/04***(2006.01)i; ***C08L 83/05***(2006.01)i
FI: C08L83/07; B32B27/00 101; B32B27/18 J; C08K3/04; C08L83/05

According to International Patent Classification (IPC) or to both national classification and IPC

**B. FIELDS SEARCHED**

Minimum documentation searched (classification system followed by classification symbols)

C08L83/07; B32B27/00; B32B27/18; C08K3/04; C08L83/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2022/004462 A1 (DOW TORAY CO., LTD.) 06 January 2022 (2022-01-06) claims 1-17, paragraphs [0031], [0032], example 1 | 1-2, 4-5, 8-15<br>3, 6-7 |
| Y | JP 2022-501459 A (DOW SILICONES CORP.) 06 January 2022 (2022-01-06) claim 1, paragraph [0038], example 1 | 3, 6-7 |
| Y | JP 2016-503108 A (DOW CORNING CORP.) 01 February 2016 (2016-02-01) claim 1, paragraph [0078] | 3, 6-7 |
| Y | JP 2016-505693 A (DOW CORNING CORP.) 25 February 2016 (2016-02-25) claim 1, paragraph [0075] | 3, 6-7 |
| A | WO 2020/116440 A1 (DOW TORAY CO., LTD.) 11 June 2020 (2020-06-11) entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## INTERNATIONAL SEARCH REPORT
**Information on patent family members**

International application No.
**PCT/JP2023/035043**

| Patent document cited in search report | Publication date (day/month/year) | Patent family member(s) | Publication date (day/month/year) |
|---|---|---|---|
| WO 2022/004462 A1 | 06 January 2022 | EP 4173821 A1<br>claim 1-17, paragraphs [0036], [0037], example 1<br>KR 10-2023-0029868 A<br>CN 116194294 A<br>TW 202206550 A | |
| JP 2022-501459 A | 06 January 2022 | WO 2020/061988 A1<br>claim 1, paragraph [0038], example 1<br>EP 3856822 A1<br>CN 112638993 A<br>KR 10-2021-0066858 A | |
| JP 2016-503108 A | 01 February 2016 | US 2015/0344671 A1<br>claim 1, paragraph [0079]<br>WO 2014/105959 A1<br>EP 2938679 A1<br>TW 201434984 A<br>CN 104981518 A<br>KR 10-2015-0102085 A | |
| JP 2016-505693 A | 25 February 2016 | US 2015/0380636 A1<br>claim 1, paragraph [0090]<br>WO 2014/105965 A1<br>TW 201430027 A<br>CN 104981510 A<br>KR 10-2015-0103134 A | |
| WO 2020/116440 A1 | 11 June 2020 | US 2022/0017701 A1<br>entire text<br>EP 3892686 A1<br>CN 113166543 A<br>KR 10-2021-0101257 A<br>TW 202028363 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014105959 A
- WO 2022004462 A
- JP 52008854 B
- JP 10195085 A
- JP H10195085 A


### Non-patent literature cited in the description


- **KUJAWSKI, M.** ; **PEARSE, J. D.** ; **SMELA, E.** *Carbon*, 2010, vol. 48, 2409-2417
- **ROSSET, S.** ; **; SHEA, H. R.** *Appl. Phys. A*, 2013, vol. 110, 281-307